(19) **Europäisches Patentamt**
**European Patent Office**
**Office européen des brevets**

(11) **EP 4 668 910 A1**

(12) **EUROPEAN PATENT APPLICATION**
published in accordance with Art. 153(4) EPC

(43) Date of publication:
**24.12.2025 Bulletin 2025/52**

(21) Application number: **24757097.1**

(22) Date of filing: **05.02.2024**

(51) International Patent Classification (IPC):
*H04W 56/00* (2009.01)     *H04W 72/04* (2023.01)
*H04W 74/08* (2024.01)     *H04W 24/08* (2009.01)
*H04J 11/00* (2006.01)     *H04W 92/18* (2009.01)
*H04W 72/56* (2023.01)     *H04L 1/18* (2023.01)

(52) Cooperative Patent Classification (CPC):
**H04J 11/00; H04L 1/18; H04W 24/08; H04W 56/00;**
**H04W 72/04; H04W 72/56; H04W 74/08;**
**H04W 92/18**

(86) International application number:
**PCT/KR2024/001669**

(87) International publication number:
**WO 2024/172368 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **13.02.2023  KR 20230018574**
**13.02.2023  KR 20230018583**
**13.02.2023  KR 20230018586**
**14.03.2023  KR 20230033411**
**11.04.2023  US 202363458639 P**
**27.04.2023  KR 20230055634**
**05.05.2023  KR 20230058809**
**09.05.2023  KR 20230059879**
**17.07.2023  KR 20230092631**
**08.09.2023  KR 20230119712**

(71) Applicant: **LG Electronics Inc.**
**Yeongdeungpo-gu**
**Seoul 07336 (KR)**

(72) Inventors:
• **HWANG, Daesung**
**Seoul 06772 (KR)**
• **LEE, Seungmin**
**Seoul 06772 (KR)**
• **SEO, Hanbyul**
**Seoul 06772 (KR)**
• **PARK, Hanjun**
**Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR DETERMINING PRIORITIES OF INTER-TERMINAL PHYSICAL FEEDBACK CHANNEL TRANSMISSIONS IN SHARED SPECTRUM**

(57)     A method of operating a first device (100) in a wireless communication system is proposed. The method may comprise the steps of: determining, on a shared spectrum, a first RB set including a first inter-device physical feedback channel transmission, which has the smallest associated inter-device communication priority value, among multiple first scheduled inter-device physical feedback channel transmissions; and performing, on the basis of the first RB set and at least one first RB set adjacent to the first RB set, simultaneous inter-device physical feedback channel transmission for at least one second scheduled inter-device physical feedback channel transmission among the multiple first scheduled inter-device physical feedback channel transmissions.

FIG. 16

determining a first RB set, on a shared spectrum, including a first inter-device physical feedback channel transmission whose related inter-device communication priority value is the smallest among a plurality of first scheduled inter-device physical feedback channel transmissions — S1610

performing simultaneous inter-device physical feedback channel transmission for at least one second scheduled inter-device physical feedback channel transmission among a plurality of first scheduled inter-device physical feedback channel transmissions, based on a first RB set and at least one first RB set contiguous to the first RB set — S1620

**Description**

**TECHNICAL FIELD**

This disclosure relates to a wireless communication system.

**BACKGROUND ART**

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

**DISCLOSURE**

**TECHNICAL SOLUTION**

According to an embodiment of the present disclosure, a method for performing, by a first device, wireless communication may be proposed. For example, the method may comprise: determining a first resource block, RB, set, on a shared spectrum, including a first inter-device physical feedback channel transmission whose related inter-device communication priority value is the smallest among a plurality of first scheduled inter-device physical feedback channel transmissions; and performing simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining a first resource block, RB, set, on a shared spectrum, including a first inter-device physical feedback channel transmission whose related inter-device communication priority value is the smallest among a plurality of first scheduled inter-device physical feedback channel transmissions; and performing simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: determining a first resource block, RB, set, on a shared spectrum, including a first inter-UE physical feedback channel transmission whose related inter-UE communication priority value is the smallest among a plurality of first scheduled inter-UE physical feedback channel transmissions; and performing simultaneous inter-UE physical feedback channel transmission for at least one second scheduled inter-UE physical feedback channel transmission among the plurality of first scheduled inter-UE physical feedback channel transmissions, based on the first RB set and at least one first RB set contiguous to the first RB set.

According to an embodiment of the present disclosure, a non-transitory computer-readable storage medium storing instructions may be proposed. For example, the instructions, based on being executed, may cause a first device to: determine a first resource block, RB, set, on a shared spectrum, including a first inter-device physical feedback channel transmission whose related inter-device communication priority value is the smallest among a plurality of first scheduled inter-device physical feedback channel transmissions; and perform simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

According to an embodiment of the present disclosure, a method for performing, by a second device, wireless communication may be proposed. For example, the method may comprise: detecting a first inter-device physical feedback channel transmission, based on an inter-device physical feedback channel resource on a shared spectrum, wherein the first inter-device physical feedback channel transmission may be included in a simultaneous inter-device physical feedback channel transmission, wherein the inter-device physical feedback channel resource may be included in a first resource block, RB, set and at least one first RB set contiguous to the first RB set, and wherein the first RB set may be determined based on the first RB set including a first inter-device physical feedback channel transmission whose related inter-device communication priority value is the smallest among a plurality of first scheduled inter-device physical feedback channel transmissions.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: detecting a first inter-device physical feedback channel transmission, based on an inter-device physical feedback channel resource on a shared spectrum, wherein the first inter-device physical feedback channel transmission may be included in a simultaneous inter-device physical feedback channel transmission, wherein the inter-device physical feedback channel resource may be included in a first resource block, RB, set and at least one first RB set contiguous to the first RB set, and wherein the first RB set may be determined based on the first RB set including a first inter-device physical feedback channel transmission whose related inter-device communication priority value is the smallest among a plurality of first scheduled inter-device physical feedback channel transmissions.

## BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows an example of a wireless communication system supporting an unlicensed band, based on an embodiment of the present disclosure.
FIG. 10 shows a method of occupying resources in an unlicensed band, based on an embodiment of the present disclosure.
FIG. 11 shows a case in which a plurality of LBT-SBs are included in an unlicensed band, based on an embodiment of the present disclosure.

FIG. 12 shows CAP operations performed by a base station to transmit a downlink signal through an unlicensed band, based on an embodiment of the present disclosure.

FIG. 13 shows type 1 CAP operations performed by a UE to transmit an uplink signal, based on an embodiment of the present disclosure.

FIG. 14 shows a procedure for determining a plurality of inter-UE physical feedback channels to be transmitted through a simultaneous inter-UE physical feedback channel transmission according to an embodiment of the present disclosure.

FIG. 15 shows a procedure for determining a plurality of inter-UE physical feedback channels to be transmitted through a simultaneous inter-UE physical feedback channel transmission, according to an embodiment of the present disclosure.

FIG. 16 shows a procedure in which a first device performs wireless communication according to an embodiment of the present disclosure.

FIG. 17 shows a procedure in which a second device performs wireless communication according to an embodiment of the present disclosure.

FIG. 18 shows a communication system 1, based on an embodiment of the present disclosure.

FIG. 19 shows wireless devices, based on an embodiment of the present disclosure.

FIG. 20 shows a signal process circuit for a transmission signal, based on an embodiment of the present disclosure.

FIG. 21 shows another example of a wireless device, based on an embodiment of the present disclosure.

FIG. 22 shows a hand-held device, based on an embodiment of the present disclosure.

FIG. 23 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

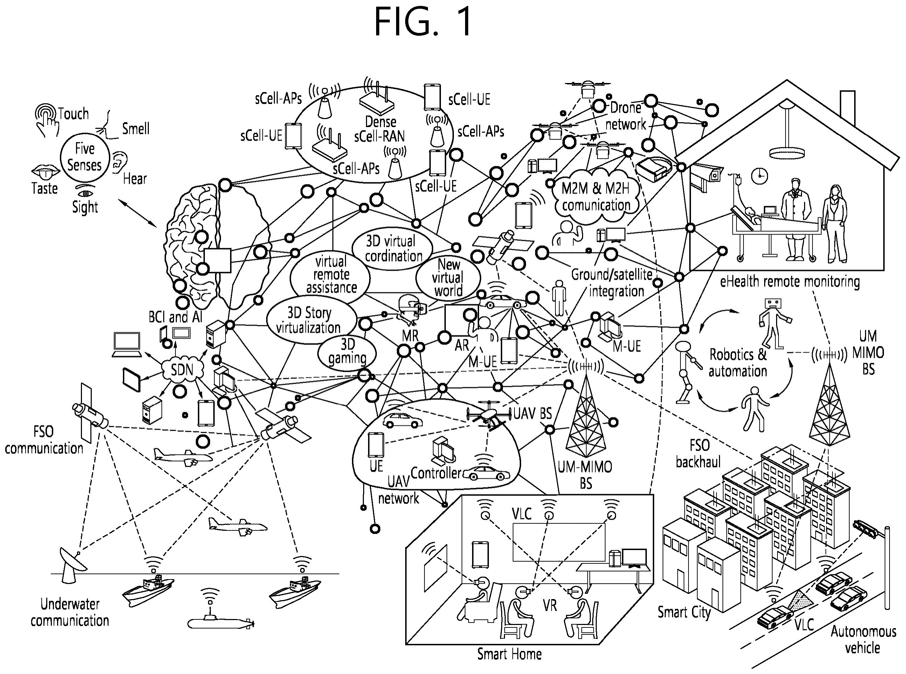

FIG. 1 shows a communication structure that can be provided in a 6G system, according to one embodiment of the present disclosure. The embodiment of FIG. 1 may be combined with various embodiments of the present disclosure.

In 6G, new network features may include the follows.

- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

The following describes the core implementation technologies for 6G systems.

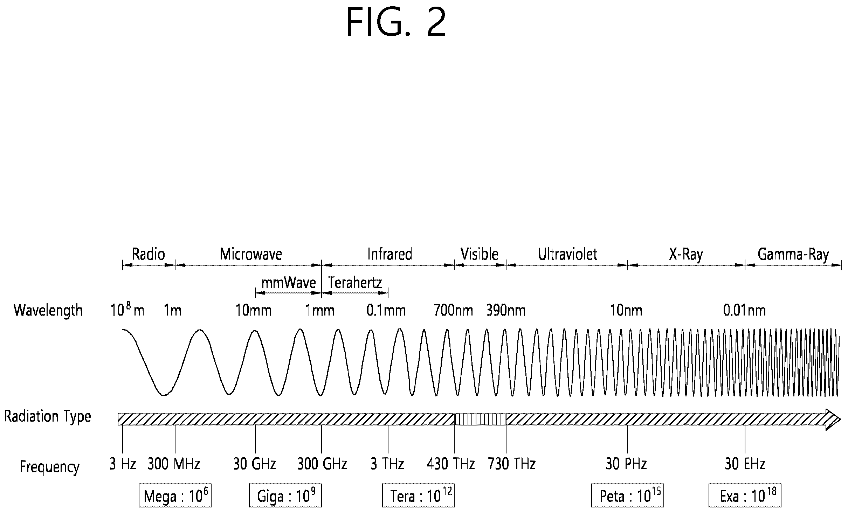

- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming

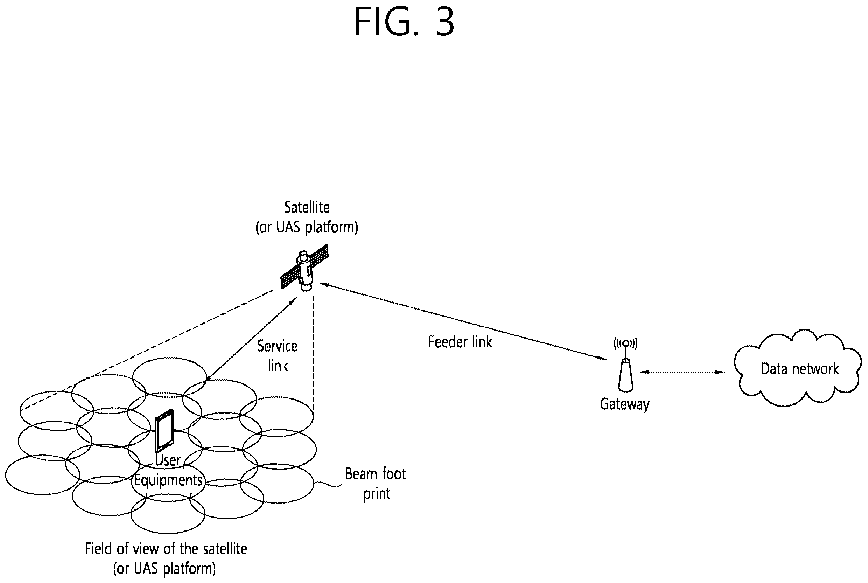

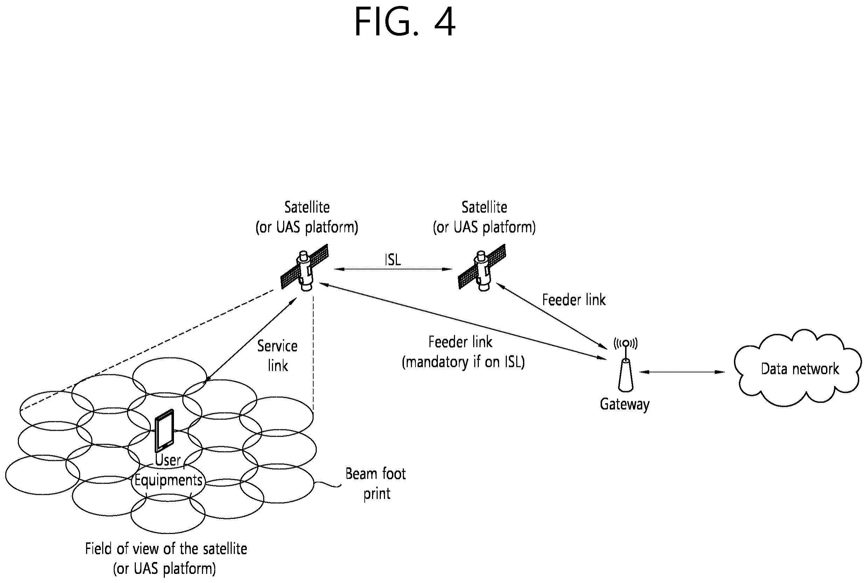

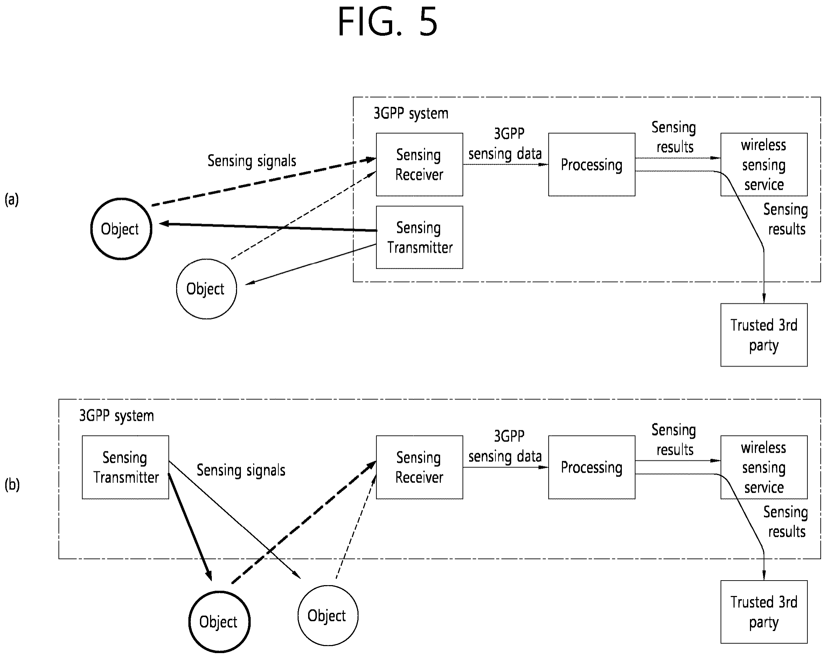

- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), the number of slots per frame ($N^{frame,u}_{slot}$), and the number of slots per subframe ($N^{subframe,u}_{slot}$), according to an SCS configuration (u), when Normal CP or Extended CP is used.

[Table 2]

| CP Type | SCS ($15*2^u$) | $N^{slote}_{symb}$ | $N^{frame,u}_{slot}$ | $N^{subframe,u}_{slot}$ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

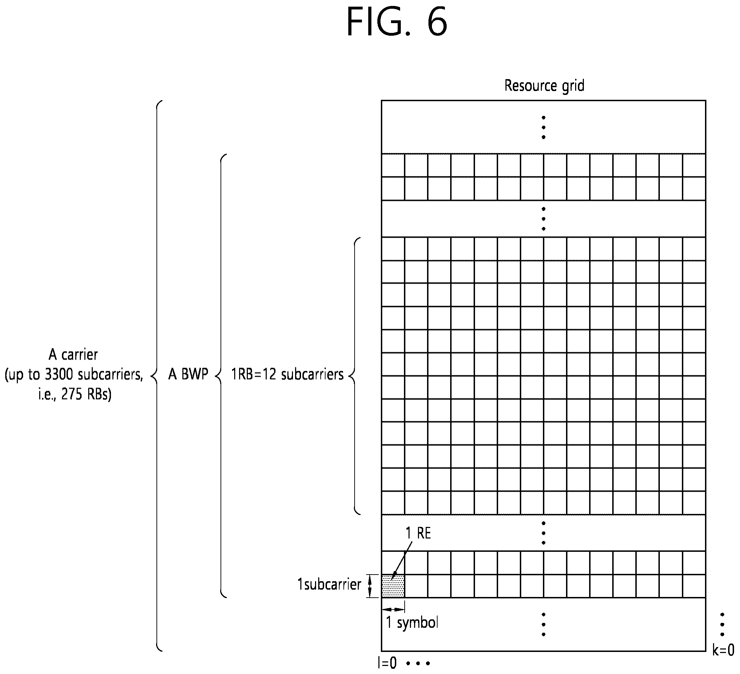

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

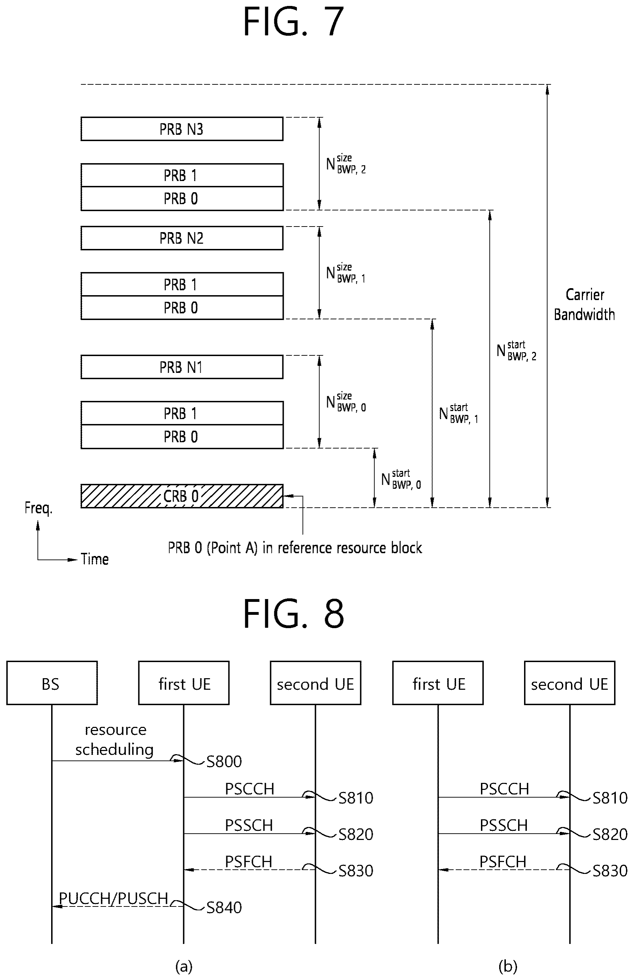

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

The following describes a UE procedure to report HARQ-ACK on a sidelink.

A UE may be instructed by SCI format that schedules a reception of PSSCH on one or more subchannels from $N^{PSSCH}_{subch}$ to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot $t'^{SL}_k$ ($0 \leq k < T'_{max}$) if $k \bmod N^{PSFCH}_{PSSCH} = 0$, where $t'^{SL}_k$ is a slot in the resource pool, and $T'_{max}$ is the number of slots in the resource pool within 10240 msec, and $N^{PSFCH}_{PSSCH}$ is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with $M^{PSFCH}_{PRB,set}$ of PRBs in a resource pool for PSFCH transmissions on PRBs in the resource pool. For the number of PSSCH slots related to a PSFCH slot that is less than or equal to $N_{subch}$ and $N^{PSFCH}_{PSSCH}$, the number of subchannels for the resource pool provided by sl-NumSubchannel, a UE allocates the PRB $[(i+j \cdot N^{PSFCH}_{PSSCH}) \cdot M^{PSFCH}_{subch,slot}, (i+1+j \cdot N^{PSFCH}_{PSSCH}) \cdot M^{PSFCH}_{subch,slot}-1]$ among the $M^{PSFCH}_{PRB, set}$ PRB for slot i and subchannel j among the PSSCH slots associated with the PSFCH slot. Here, $M^{PSFCH}_{subch,slot} = M^{PSFCH}_{PRB,set} / (N_{subch} \cdot N^{PSFCH}_{PSSCH})$, $0 \leq i < N^{PSFCH}_{PSSCH}$, $0 \leq j < N_{subch}$, and the allocations starts in ascending order for i and continues in ascending order for j. A UE expects $M^{PSFCH}_{PRB,set}$ to be a multiple of $N_{subch} \cdot N^{PSFCH}_{PSSCH}$.

A UE determines the number of available PSFCH resources for multiplexing HARQ-ACK information included in a **PSFCH** transmission as $R^{PSFCH}_{PRB,CS} = N^{PSFCH}_{type} \cdot M^{PSFCH}_{subch,slot} \cdot N^{PSFCH}_{CS}$. Here, $N^{PSFCH}_{CS}$ may be the number of cyclic shift pairs for the resource pool, and based on an indication by the higher layer,

- $N^{PSFCH}_{type} = 1$, and $M^{PSFCH}_{subch,slot}$ PRB may be related to the starting subchannel of the corresponding PSSCH,
- $N^{PSFCH}_{type} = N^{PSSCH}_{subch}$ and $N^{PSSCH}_{subch} \cdot M^{PSFCH}_{subch,slot}$ PRB is related to one or more subchannels among $N^{PSSCH}_{subch}$ subchannels of the corresponding PSSCH.

A PSFCH resource is indexed first in ascending order of a PRB indexes among $N^{PSFCH}_{type} \cdot M^{PSFCH}_{subch,slot}$ PRBs, after then, it is indexed in ascending order of cyclic shift pair indexes among $N^{PSFCH}_{CS}$ cyclic shift pairs.

A UE determines an index of a PSFCH resource for a PSFCH transmission in response to the PSSCH reception as $(P_{ID} + M_{ID}) \bmod R^{PSFCH}_{PRB,CS}$. Here, $P_{ID}$ is a physical layer source ID provided by SCI format 2-A or 2-B scheduling a PSSCH reception, $M_{ID}$ is an ID of a UE receiving a PSSCH, indicated from the higher layer when a UE detects SCI format 2-A in which a cast type indicator field value is "01", $M_{ID}$ is 0 otherwise.

A UE determines $m_0$ value for calculating a cyclic shift $\alpha$ value from $N^{PSFCH}_{CS}$ and a cyclic shift pair index which corresponds to a PSFCH resource index using Table 3.

[Table 3]

| $N^{PSFCH}_{CS}$ | $m_0$ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 4, when a UE detects SCI format 2-A with a cast type indicator field value of "01" or "10", or as shown in Table 5, when a UE detects SCI format 2-B or SCI format 2-A with a cast type indicator field value of "11", a UE determines $m_{cs}$ the value for calculating a cyclic shift $\alpha$ value. A UE applies one cyclic shift among cyclic shifts to a sequence used in a PSFCH transmission.

[Table 4]

| HARQ-ACK Value | 0 (NACK) | 1 (ACK) |
|---|---|---|
| Sequence cyclic shift | 0 | 6 |

[Table 5]

| HARQ-ACK Value | 0 (NACK) | 1 (ACK) |
|---|---|---|
| Sequence cyclic shift | 0 | N/A |

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

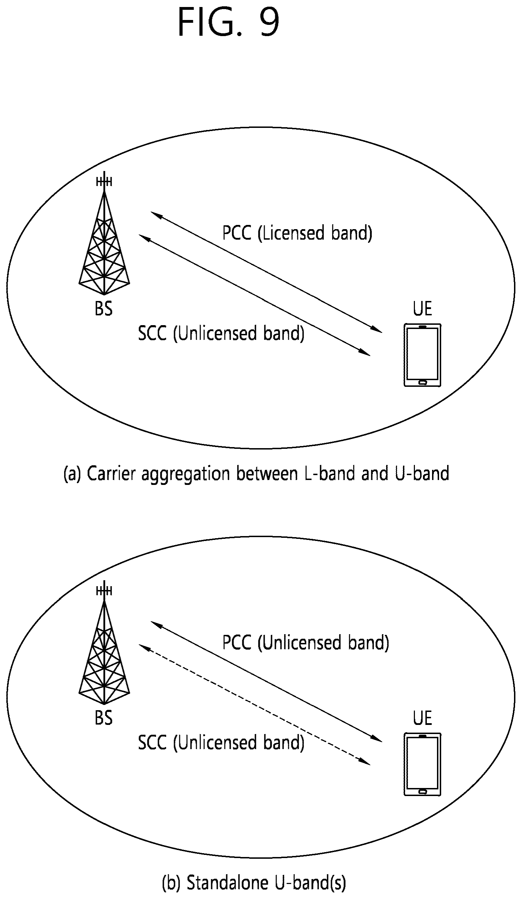

FIG. 9 shows an example of a wireless communication system supporting an unlicensed band, based on an embodiment of the present disclosure. For example, FIG. 9 may include an unlicensed spectrum (NR-U) wireless communication system. The embodiment of FIG. 9 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 9, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 9. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 9, the base station may be replaced with the UE. In this case, for example, PSCCH transmission, PSSCH transmission, PSFCH transmission, S-SSB transmission, etc. may be supported on a UCell.

Unless otherwise mentioned, the following definitions may be applied to terms used herein. For example, unlicensed spectrum and shared spectrum may be mutually interchangeable/substitutable in this disclosure. For example, channel sensing (on shared spectrum) in the present disclosure may refer to channel sensing related to a channel access procedure (CAP). The CAP may include a step of (channel) sensing for a resource (or, channel) on which a transmission is to be performed.

- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of $T_{sl} = 9$ us. The base station or the UE senses a channel during a sensing slot duration. If power detected for at least 4 us within the sensing slot duration is less than an energy detection threshold $X_{thresh}$, the sensing slot duration $T_{sl}$ is considered to be idle. Otherwise, the sensing slot duration $T_{sl} = 9$ us is considered to be busy. CAP may also be referred to as listen before talk (LBT). For example, a channel access procedure (CAP) may include an LBT, and channel sensing may be performed to monitor the power of that channel during a specific time interval (channel sensing interval) for the CAP.
- Channel occupancy: transmission(s) on channel(s) by the base station/UE after a channel access procedure.

- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

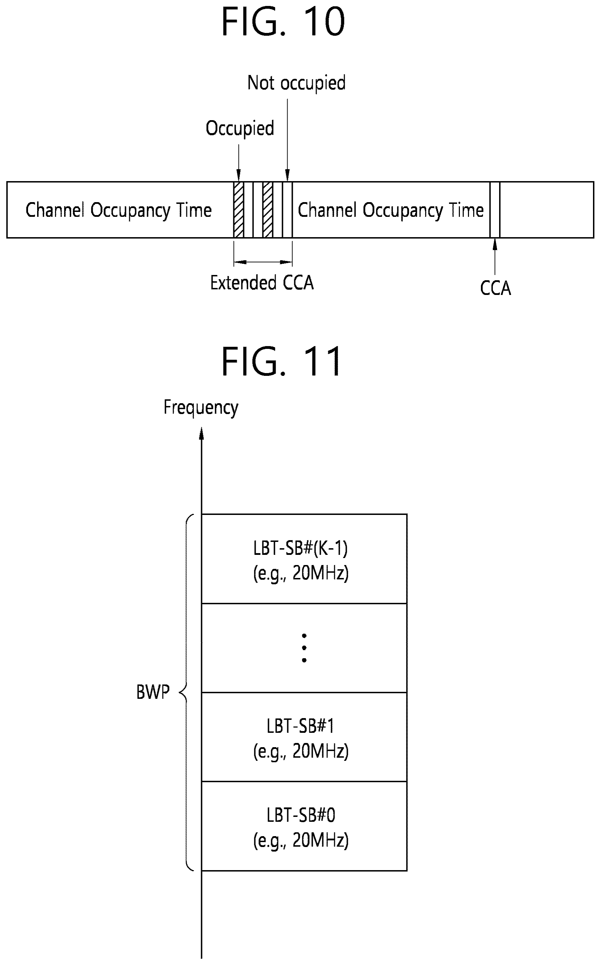

FIG. 10 shows a method of occupying resources in an unlicensed band, based on an embodiment of the present disclosure. The embodiment of FIG. 10 may be combined with various embodiments of the present disclosure.

Referring to FIG. 10, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., $X_{Thresh}$) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT. For example, a channel access procedure (CAP) may include an LBT, and channel sensing may be performed to monitor the power of that channel during a specific time interval (channel sensing interval) for the CAP.

Table 3 shows an example of the channel access procedure (CAP) supported in NR-U.

[Table 3]

| | Type | Explanation |
|---|---|---|
| DL | Type 1 CAP | CAP with random back-off<br>- time duration spanned by the sensing slots that are sensed to be idle before a downlink transmission(s) is random |
| | Type 2 CAP<br>- Type 2A, 2B, 2C | CAP without random back-off<br>- time duration spanned by sensing slots that are sensed to be idle before a downlink transmission(s) is deterministic |
| UL or SL | Type 1 CAP | CAP with random back-off<br>- time duration spanned by the sensing slots that are sensed to be idle before an uplink or sidelink transmission(s) is random |
| | Type 2 CAP<br>- Type 2A, 2B, 2C | CAP without random back-off<br>- time duration spanned by sensing slots that are sensed to be idle before an uplink or sidelink transmission(s) is deterministic |

Referring to Table 3, the LBT type or CAP for DL/UL/SL transmission may be defined. However, Table 3 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 11 shows a case in which a plurality of LBT-SBs are included in an unlicensed band, based on an embodiment of the present disclosure. The embodiment of FIG. 11 may be combined with various embodiments of the present disclosure.

Referring to FIG. 11, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:

- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 4 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

[Table 4]

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

(1) Type 1 downlink (DL) CAP Method

In the type 1 DL CAP, the length of a time duration spanned by sensing slots sensed to be idle before transmission(s) may be random. The type 1 DL CAP may be applied to the following transmissions:

- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

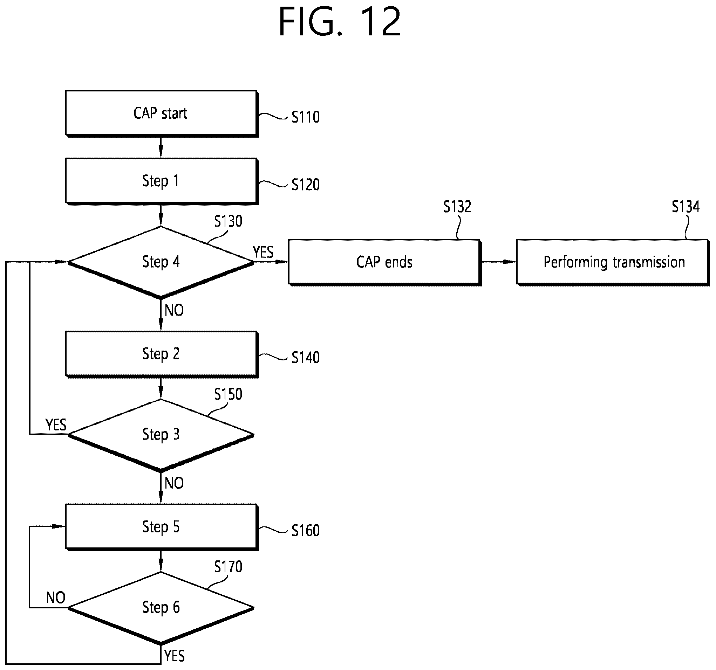

FIG. 12 shows CAP operations performed by a base station to transmit a downlink signal through an unlicensed band, based on an embodiment of the present disclosure. The embodiment of FIG. 12 may be combined with various embodiments of the present disclosure.

Referring to FIG. 12, the base station may sense whether a channel is idle for sensing slot durations of a defer duration $T_d$. Then, if a counter N is zero, the base station may perform transmission (S134). In this case, the base station may adjust the counter N by sensing the channel for additional sensing slot duration(s) according to the following steps:

Step 1) (S 120) The base station sets N to $N_{init}$ (N= $N_{init}$), where $N_{init}$ is a random number uniformly distributed between 0 and $CW_p$. Then, step 4 proceeds.

Step 2) (S140) If N>0 and the base station determines to decrease the counter, the base station sets N to N-1 (N=N-1).

Step 3) (S150) The base station senses the channel for the additional sensing slot duration. If the additional sensing slot duration is idle (Y), step 4 proceeds. Otherwise (N), step 5 proceeds.

Step 4) (S130) If N=0 (Y), the base station terminates the CAP (S132). Otherwise (N), step 2 proceeds.

Step 5) (S160) The base station senses the channel until either a busy sensing slot is detected within an additional defer duration $T_d$ or all the slots of the additional defer duration $T_d$ are detected to be idle.

Step 6) (S170) If the channel is sensed to be idle for all the slot durations of the additional defer duration $T_d$ (Y), step 4 proceeds. Otherwise (N), step 5 proceeds.

Table 5 shows that $m_p$, a minimum contention window (CW), a maximum CW, a maximum channel occupancy time (MCOT), and an allowed CW size, which are applied to the CAP, vary depending on channel access priority classes.

[Table 5]

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 5, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration $T_d$ is configured in the following order: duration $T_f$ (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on HARQ-ACK feedback (e.g., the ratio of ACK or NACK) for a previous DL burst (e.g., PDSCH) (CW size update). For example, $CW_p$ may be initialized to $CW_{min,p}$ based on the HARQ-ACK feedback for the previous DL burst. Alternatively, $CW_p$ may be increased to the next higher allowed value or maintained as it is.

(2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration $T_{short\_dl}$ = 25 us. Herein, $T_{short\_dl}$ includes the duration $T_f$ (=16 us) and one sensing slot duration immediately after the duration $T_f$, where the duration $T_f$ includes a sensing slot at the beginning thereof.

- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for Tr = 16 us. $T_f$ includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

(1) Type 1 uplink (UL) CAP Method

In the type 1 UL CAP, the length of a time duration spanned by sensing slots sensed to be idle before transmission(s) is random. The type 1 UL CAP may be applied to the following transmissions.

- PUSCH/SRS transmission(s) scheduled and/or configured by the base station
- PUCCH transmission(s) scheduled and/or configured by the base station
- Transmission(s) related to a random access procedure (RAP)

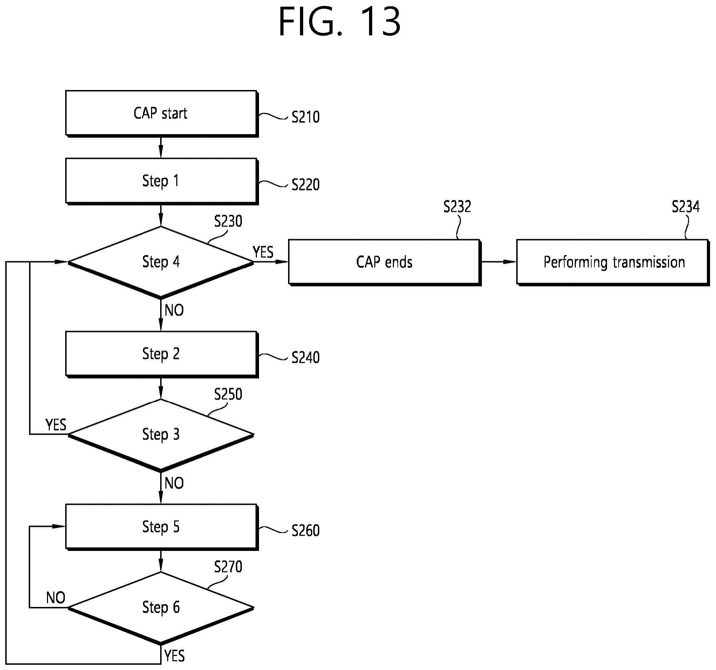

FIG. 13 shows type 1 CAP operations performed by a UE to transmit an uplink signal, based on an embodiment of the present disclosure. The embodiment of FIG. 13 may be combined with various embodiments of the present disclosure.

Referring to FIG. 13, the UE may sense whether a channel is idle for sensing slot durations of a defer duration $T_d$. Then, if a counter N is zero, the UE may perform transmission (S234). In this case, the UE may adjust the counter N by sensing the channel for additional sensing slot duration(s) according to the following steps:

Step 1) (S220) The UE sets N to $N_{init}$ (N = $N_{init}$), where $N_{init}$ is a random number uniformly distributed between 0 and $CW_p$. Then, step 4 proceeds.

Step 2) (S240) If N>0 and the UE determines to decrease the counter, the UE sets N to N-1 (N = N-1).

Step 3) (S250) The UE senses the channel for the additional sensing slot duration. If the additional sensing slot duration is idle (Y), step 4 proceeds. Otherwise (N), step 5 proceeds.

Step 4) (S230) If N=0 (Y), the UE terminates the CAP (S232). Otherwise (N), step 2 proceeds.

Step 5) (S260) The UE senses the channel until either a busy sensing slot is detected within an additional defer duration $T_d$ or all the slots of the additional defer duration $T_d$ are detected to be idle.

Step 6) (S270) If the channel is sensed to be idle for all the slot durations of the additional defer duration $T_d$ (Y), step 4 proceeds. Otherwise (N), step 5 proceeds.

Table 6 shows that $m_p$, a minimum CW, a maximum CW, a maximum channel occupancy time (MCOT), and an allowed CW size, which are applied to the CAP, vary depending on channel access priority classes.

[Table 6]

| Channel Access Priority Class (p) | $m_p$ | $CW_{min,p}$ | $CW_{max,p}$ | $T_{ulmcot,p}$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 6, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration $T_d$ is configured in the following order: duration Tr (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on an explicit/implicit reception response for a previous UL burst (e.g., PUSCH) (CW size update). For example, $CW_p$ may be initialized to $CW_{min,p}$ based on the explicit/implicit reception response for the previous UL burst. Alternatively, $CW_p$ may be increased to the next higher allowed value or maintained as it is.

(2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration $T_{short\_dl}$ = 25 us. Herein, $T_{short\_dl}$ includes the duration $T_f$ (=16 us) and one sensing slot duration immediately after the duration $T_f$. In the type 2A UL CAP, $T_f$ includes a sensing slot at the beginning thereof. In the type 2B UL CAP, the UE may perform transmission immediately after the channel is sensed to be idle for the sensing duration $T_f$ = 16 us. In the type 2B UL CAP, Tr includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, $m_p$, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time $T_d$ ($T_d = T_f + m_p * T_{sl}$), the UE may attempt to transmit data by occupying the channel. For example, $T_{sl}$ (= 9 usec) is a basic sensing unit or sensing slots, and may include a measurement duration for at least 4 usec. For example, the front 9 usec of $T_f$ (= 16 usec) may be configured to be $T_{sl}$.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in unlicensed bands, in order to simplify channel sensing, it may be informed through channel occupancy time (COT) interval information that the channel obtained through initial general channel sensing is occupied for a certain period of time, and the length of the COT duration may be configured to have different maximum values depending on the priority of the service or data packet or the channel access priority class (CAPC).

Meanwhile, in a shared spectrum (e.g., unlicensed band), inter-UE transmission (e.g., sidelink transmission) may be performed in the form of being transmitted via a plurality of separated RBs according to the specification.

Meanwhile, for uplink channel transmission in a shared spectrum (e.g., unlicensed band), a UE may be provided with one or more RB set(s) and one or more interlaces from a base station, and the final transmission resource may be determined as the intersection of the RBs within the provided RB set(s) and the RBs corresponding to the provided interlaces.

Meanwhile, an interlace may be defined in a common RB (CRB) grid, and in the CRB grid, each interlace may be a set of RBs spaced every 10 RBs for 15 kHz or every 5 RBs for 30 kHz, where the index of each interlace may be determined based on the RB offset from CRB #0.

In the case of inter-UE communication (e.g., SL communication), sensing and/or resource (re)selection may be performed in units of subchannels, and accordingly, the subchannels may need to be represented in the form of interlaces and/or RB sets. Through this, there may be an advantage in that subchannel-based sensing operations and/or resource reservation methods can be reused as much as possible.

Meanwhile, in the case of 60 kHz, an interlace structure is not defined, and when inter-UE transmission/reception (e.g., SL transmission/reception) is based on a 60 kHz SCS, a method may be needed to ensure that the size of bandwidth within an occupied channel satisfies a certain ratio (e.g., 80%) of the channel size, according to the occupied channel bandwidth (OCB) requirement.

According to an embodiment of the present disclosure, the embodiment for 60 kHz SCS may be extended and applied to SCSs other than 15 kHz and/or 30 kHz SCS. According to an embodiment of the present disclosure, the embodiment for 60 kHz SCS may also be extended and applied to 15 kHz and/or 30 kHz SCS.

Meanwhile, if the number of allocated PRBs for inter-UE transmission (e.g., SL transmission) is significantly increased in order to meet the OCB requirements and PSD requirements, the frequency-domain resources may become insufficient, particularly for inter-UE physical shared feedback channel (e.g., PSFCH) resources.

Meanwhile, when a small number of PRBs are allocated and positioned at the edge of the channel in order to meet the OCB requirements, the total transmit power may be limited according to the PSD requirements.

Meanwhile, the OCB requirement may be temporarily omitted within a Channel Occupancy Time (COT) period, and in this case, the occupied channel bandwidth may still need to be greater than and/or equal to 2 MHz

Meanwhile, a UE may perform a plurality of inter-UE physical shared feedback channel (e.g., PSFCH) transmissions through inter-UE physical shared feedback channel (e.g., PSFCH) resources present in one or a plurality of RB sets, and/or one or a plurality of inter-UE physical shared feedback channel (e.g., PSFCH) transmissions may occur in each RB set.

Meanwhile, the number of inter-UE physical shared feedback channel (e.g., PSFCH) transmissions that can be simultaneously transmitted by a UE may be limited, and whether inter-UE physical shared feedback channel (e.g., PSFCH) transmission is possible may be determined according to the success or failure of channel sensing for the channel access procedure (e.g., LBT), in unit of RB set(s).

Meanwhile, after the channel sensing operation for the channel access procedure (e.g., LBT), there may be insufficient processing time when selecting inter-UE physical shared feedback channel (e.g., PSFCH) resources to actually transmit.

For example, before performing the channel sensing operation for the channel access procedure (e.g., LBT) for the inter-UE physical shared feedback channel (e.g., PSFCH) transmissions, the UE may select a subset of a plurality of inter-UE physical shared feedback channel (e.g., PSFCH) transmissions (based on a prioritization procedure based on a sidelink (SL) priority value), and may transmit only the corresponding inter-UE physical shared feedback channel (e.g., PSFCH) transmissions if the channel sensing results for the selected inter-UE physical shared feedback channel (e.g., PSFCH) transmissions and/or the RB set(s) to which the inter-UE physical shared feedback channel (e.g., PSFCH) transmissions are mapped are idle.

For example, if the channel sensing result for the selected (determined based on an inter-UE priority value (e.g., SL priority value)) transmissions (the channel sensing result of an RB set corresponds to it) are busy, even if an inter-UE physical shared feedback channel (e.g., PSFCH) transmission is selected according to the prioritization procedure, the UE may cancel the transmission of the inter-UE physical shared feedback channel (e.g., PSFCH).

And/or, for example, in the above case, the number of inter-UE physical shared feedback channel transmissions (e.g., PSFCH transmissions) that the UE actually transmits simultaneously may be smaller than the number of inter-UE physical shared feedback channel transmissions (e.g., PSFCH transmissions) determined based on at least one of the number of scheduled inter-UE physical shared feedback channel transmissions (e.g., PSFCH transmissions), the maximum number of inter-UE physical shared feedback channel transmissions (e.g., PSFCH transmissions) of the UE, and the inter-UE priority value (e.g., SL priority value).

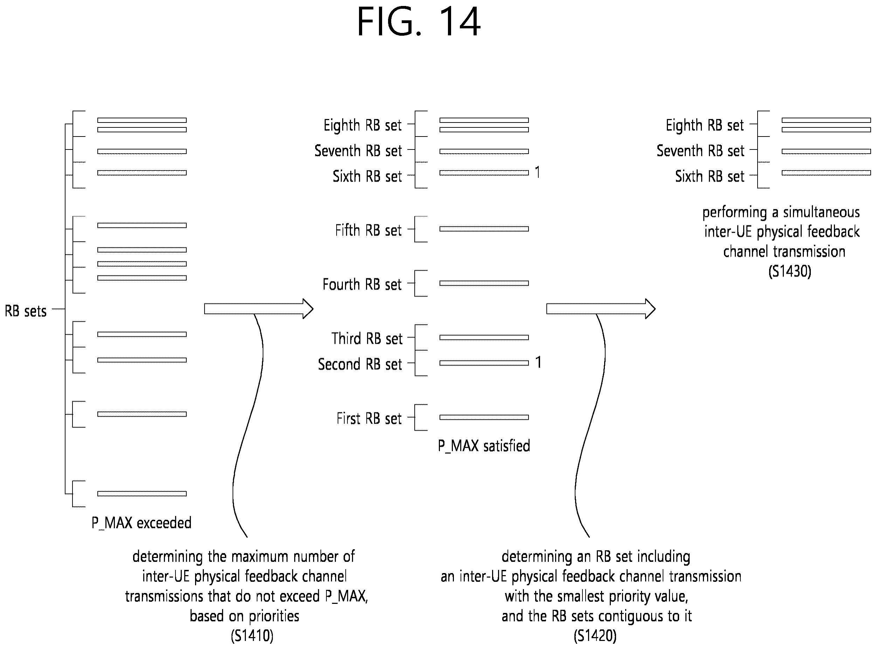

FIG. 14 shows a procedure for determining a plurality of inter-UE physical feedback channels to be transmitted through a simultaneous inter-UE physical feedback channel transmission according to an embodiment of the present disclosure. The embodiment of FIG. 14 may be combined with various embodiments of the present disclosure.

Referring to FIG. 14, scheduled inter-UE physical feedback channel transmissions that a feedback transmitting UE is to transmit are shown. For example, the scheduled inter-UE physical feedback channel transmissions may be divided and included in a plurality of RB sets, respectively. For example, if transmitting the scheduled inter-UE physical feedback channel transmissions simultaneously would exceed the maximum transmit power, P_MAX, of the feedback transmitting UE, it is necessary to determine at least one inter-UE physical feedback channel that is to be transmitted through the simultaneous inter-UE physical feedback channel transmission.

In step S1410, for example, the feedback transmitting UE may determine a maximum number of inter-UE physical feedback channel transmissions such that the required transmit power does not exceed P_MAX, by gradually reducing the scheduled inter-UE physical feedback channel transmissions having lower priorities (i.e., with the largest priority value), based on the priorities related to the scheduled inter-UE physical feedback channel transmissions.

In the present disclosure, it is assumed that the scheduled inter-UE physical feedback channel transmissions included in the first RB set to the eighth RB set of FIG. 14 have been determined from all the scheduled inter-UE physical feedback channel transmissions based on their priorities and the maximum transmit power of the feedback transmitting UE. For example, here, it is assumed that the priority value (e.g., PSFCH-related priority) of the PRB included in the sixth RB set and the priority value of the PRB included in the second RB set are both 1 (i.e., the smallest among the priority values related to the scheduled inter-UE physical feedback channel transmissions included in the determined first to eighth RB sets).

In step S1420, the feedback transmitting UE may determine to transmit, via the simultaneous inter-UE physical feedback channel transmission, a group of RB sets having the largest number of adjacent RB sets among the sixth RB set and the second RB set, which include the scheduled physical feedback channel transmissions related to the priority value of 1. That is, for example, here, the number of RB sets in the adjacent RB set group (e.g., the sixth to ninth RB sets) of the sixth RB set is three, which is greater than the number of RB sets in the adjacent RB set group (e.g., the second and third RB sets) of the second RB set, which is two. Therefore, the feedback transmitting UE may determine to perform, via the simultaneous inter-UE physical feedback channel transmission, the scheduled inter-UE physical feedback channel transmissions included in the adjacent RB set group of the sixth RB set.

In step S1430, the feedback transmitting UE may transmit, via the simultaneous inter-UE physical feedback channel transmission, the scheduled inter-UE physical feedback channel transmissions included in the adjacent RB set group of the sixth RB set.

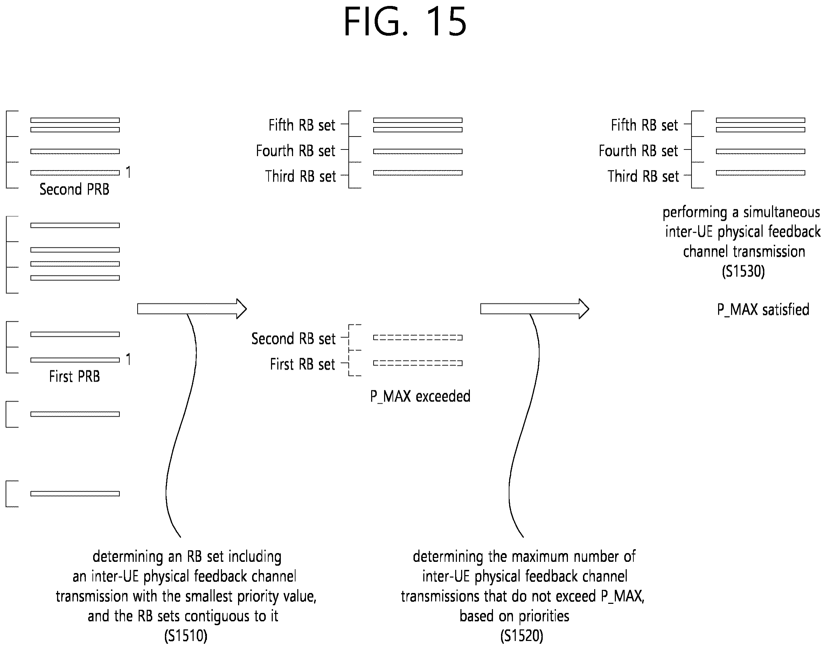

FIG. 15 shows a procedure for determining a plurality of inter-UE physical feedback channels to be transmitted through a simultaneous inter-UE physical feedback channel transmission, according to an embodiment of the present disclosure. The embodiment shown in FIG. 15 may be combined with various embodiments of the present disclosure.

Referring to FIG. 15, scheduled inter-UE physical feedback channel transmissions that the feedback transmitting UE, which transmits inter-UE physical feedback channels, is to transmit are shown. For example, the scheduled inter-UE physical feedback channel transmissions may be divided and included in a plurality of RB sets, respectively. For example, among the scheduled inter-UE physical feedback channel transmissions, those mapped to a first physical resource block (PRB) and a second PRB, each having a related priority value (e.g., PSFCH-related priority value) of 1 (or, for example, the smallest value among the priority values related to the scheduled inter-UE physical feedback channel transmissions), may be included.

In step S1510, the feedback transmitting UE may determine, among the RB sets including the scheduled inter-UE physical feedback channel transmissions, an RB set that includes an inter-UE physical feedback channel transmission having the smallest priority value (e.g., 1) and RB sets adjacent thereto. For example, the feedback transmitting UE may determine the group of RB sets having the largest number of adjacent RB sets, among the third RB set including the scheduled physical feedback channel transmission related to the priority value of 1 and its adjacent RB set group (i.e., the third RB set to the fifth RB set), and the first RB set and its adjacent RB set group (i.e., the first RB set to the second RB set). That is, for example, in this case, since the number of RB sets in the adjacent RB set group of the third RB set (i.e., the third RB set to the fifth RB set) is three, which is greater than the number of RB sets in the adjacent RB set group of the first RB set (i.e., the first RB set and the second RB set), which is two, the feedback transmitting UE may determine the adjacent RB set group of the third RB set among the RB sets including the scheduled inter-UE physical feedback channel transmissions.

Here, it is assumed that performing the scheduled inter-UE physical feedback channel transmissions included in the determined adjacent RB set group of the third RB set simultaneously would exceed the maximum transmit power, P_MAX, of the feedback transmitting UE. For example, in this case, at least one inter-UE physical feedback channel that is actually to be transmitted through the simultaneous inter-UE physical feedback channel transmission needs to be determined.

In step S1520, for example, the feedback transmitting UE may determine a maximum number of inter-UE physical feedback channel transmissions, among the scheduled inter-UE physical feedback channel transmissions included in the adjacent RB set group of the third RB set, based on priorities related to the scheduled inter-UE physical feedback channel transmissions, such that the required transmit power does not exceed P_MAX by excluding the scheduled inter-UE physical feedback channel transmissions having lower priority (i.e., having a higher priority value). For example, in the present embodiment, it is assumed that the scheduled inter-UE physical feedback channel transmission mapped to the PRB in the fifth RB set is excluded through the priority-based determination operation of the scheduled inter-UE physical feedback channel transmissions that are to be actually performed.

For example, it is assumed that the total transmit power required for the transmissions of the final scheduled inter-UE physical feedback channel transmissions, determined based on the priority-based determination operation of the scheduled inter-UE physical feedback channel transmissions that are to be actually performed, satisfies P_MAX.

In step S1530, the feedback transmitting UE may transmit the scheduled inter-UE physical feedback channel transmissions included in the adjacent RB set group of the third RB set through the simultaneous inter-UE physical feedback channel transmission.

For example, a UE may perform channel sensing for inter-UE physical shared feedback channel transmission(s) (e.g., PSFCH transmission(s)) and/or for RB sets to which the inter-UE physical shared feedback channel transmission(s) (e.g., PSFCH transmission(s)) are mapped, and may select inter-UE physical shared feedback channel transmission(s) (e.g., PSFCH transmission(s)) associated with the RB set(s) whose sensing results are idle.

For example, a UE may determine inter-UE physical shared feedback channel transmission(s) (e.g., PSFCH transmission(s)) to be finally selected according to a prioritization procedure based on an inter-UE priority value (e.g., SL priority value) and/or transmit power value for the selected inter-UE physical shared feedback channel transmission(s) (e.g., PSFCH transmission(s)), and the UE may transmit the finally selected inter-UE physical shared feedback channel (e.g., PSFCH).

For example, a UE may set a representative priority value of the idle RB set(s) to the smallest value among the priority values of inter-UE physical shared feedback channel transmission(s) (e.g., PSFCH transmission(s)) within the RB set(s), and/or may include the inter-UE physical shared feedback channel transmission(s) (e.g., PSFCH transmission(s)) within the RB set(s), in order from the RB set(s) with a smaller representative priority value, in the inter-UE physical shared feedback channel transmission(s) (e.g., PSFCH transmission(s)) to be finally selected.

For example, after the inter-UE physical shared feedback channel transmission(s) (e.g., PSFCH transmission(s)) for a specific RB set are selected as described above, if the number of inter-UE physical shared feedback channel transmissions (e.g., PSFCH transmissions) that the UE can transmit simultaneously remains and/or residual transmit power exists, the UE may include the inter-UE physical shared feedback channel transmission(s) (e.g., PSFCH transmission(s)) belonging to the RB set of the next priority in the inter-UE physical shared feedback channel transmission(s) (e.g., PSFCH transmission(s)) to be finally selected.

For example, after the inter-UE physical shared feedback channel transmission(s) (e.g., PSFCH transmission(s)) for a specific RB set are selected as described above, if the number of inter-UE physical shared feedback channel transmissions (e.g., PSFCH transmissions) that the UE can transmit simultaneously is insufficient and/or the residual transmit power is insufficient, the UE may not include the inter-UE physical shared feedback channel transmission(s) (e.g., PSFCH transmission(s)) of the RB set in the inter-UE physical shared feedback channel transmission(s) (e.g., PSFCH transmission(s)) to be finally selected.

For example, after the inter-UE physical shared feedback channel transmission(s) (e.g., PSFCH transmission(s)) for a specific RB set are selected as described above, if the number of inter-UE physical shared feedback channel transmissions (e.g., PSFCH transmissions) that the UE can transmit simultaneously is insufficient and/or the residual transmit power is insufficient, the UE may select only a portion of the inter-UE physical shared feedback channel transmission(s) (e.g., PSFCH transmission(s)) (up to the remaining number of inter-UE physical shared feedback channel transmissions and/or the remaining transmit power) according to a prioritization procedure based on the inter-UE priority value (e.g., SL priority value) and/or the transmit power value.

The smallest inter-UE priority value (e.g., SL priority value) among the inter-UE physical shared feedback channels (e.g., PSFCHs) belonging to the RB set may be selected as the representative inter-UE priority value for each RB set.

For example, the UE may preferentially transmit the inter-UE physical shared feedback channels (e.g., PSFCHs) of the RB set having the smallest representative inter-UE priority value (e.g., SL priority value).

For example, if the number of inter-UE physical shared feedback channels (e.g., PSFCHs) within the RB set is greater than the maximum number of inter-UE physical shared feedback channel transmissions (e.g., PSFCH transmissions) of the UE, the entire or a part of the inter-UE physical shared feedback channels (e.g., PSFCHs) may be selected based on the inter-UE priority value (e.g., SL priority value) for actual transmission and the actual transmission may be performed.

For example, the inter-UE physical shared feedback channel transmissions (e.g., PSFCH transmissions) to be transmitted may be determined based on the number of inter-UE physical shared feedback channel transmissions (e.g., PSFCH transmissions) within the RB set.

For example, among the RB sets having a number of inter-UE physical shared feedback channel transmissions (e.g., PSFCH transmissions) that is equal to or less than the maximum number of inter-UE physical shared feedback channel transmissions of the UE, the inter-UE physical shared feedback channel transmissions (e.g., PSFCH transmissions) of the RB set having the largest number of such transmissions may be prioritized.

For example, the UE may (prior to the above process) adjust the number of inter-UE physical shared feedback channel transmissions (e.g., PSFCH transmissions) to be equal to or less than the maximum number of inter-UE physical shared feedback channel transmissions, according to an inter-UE physical shared feedback channel (e.g., PSFCH) prioritization procedure per RB set and/or a transmit power allocation procedure (for each RB set).

For example, the UE may select an RB set to perform actual inter-UE physical shared feedback channel transmission (e.g., PSFCH transmission) from among the RB sets for which the UE has successfully performed channel sensing for the channel access procedure (e.g., LBT), such that the number of transmissions is as close as possible to the maximum number of inter-UE physical shared feedback channel transmissions.

For example, when the UE selects a plurality of inter-UE physical shared feedback channel transmissions (e.g., PSFCH transmissions), the UE may select the transmissions such that the interlaces for the plurality of inter-UE physical shared feedback channel transmissions are the same and/or exist in contiguous RB set(s).

For example, a UE may perform an inter-UE physical shared feedback channel (e.g., PSFCH) simultaneous transmission for all or part of inter-UE physical shared feedback channel (e.g., PSFCH) belonging to a contiguous and/or consecutive RB set group with an RB set determined based on a priority (the smallest priority value) for an inter-UE physical shared feedback channel (e.g., PSFCH).

For example, the UE may drop an inter-UE physical shared feedback channel transmission (e.g., PSFCH transmission) other than the one belonging to a consecutive RB set group that includes an RB set to which the inter-UE physical shared feedback channel (e.g., PSFCH) having the smallest priority value belongs, and/or the transmit power and/or the final number of transmissions to be actually performed of the inter-UE physical shared feedback channel transmission (e.g., PSFCH transmission) within the consecutive RB set group may be determined.

For example, the UE may preferentially select a specific RB set group consisting of consecutive RB sets, among a plurality of RB set(s) for a plurality of inter-UE physical shared feedback channel transmissions (e.g., PSFCH transmissions), and/or for the inter-UE physical shared feedback channel transmissions (e.g., PSFCH transmissions) within the selected specific RB set group, may perform power control and/or select transmission target inter-UE physical shared feedback channel (e.g., PSFCH).

For example, the specific RB set group may be an RB set group including an inter-UE physical shared feedback channel (e.g., PSFCH) having the smallest priority value. For example, the specific RB set group may be the one having the largest number of constituent RB sets. For example, the specific RB set group may be the one having the largest number of inter-UE physical shared feedback channels (e.g., PSFCHs) to be transmitted. For example, the specific RB set group may be selected according to the implementation of the UE. For example, the specific RB set group may be the one including a specific HARQ-ACK feedback option (e.g., unicast and/or groupcast HARQ-ACK feedback option 1). For example, the specific RB set group may be selected as a combination of the above-described embodiments.

For example, in order to simultaneously transmit a plurality of inter-UE physical shared feedback channels (e.g., PSFCHs) belonging to discontinuous RB sets, the UE may transmit a specific inter-UE physical shared feedback channel (e.g., PSFCH) so as to ensure that the plurality of inter-UE physical shared feedback channel transmissions (e.g., PSFCH transmissions) actually transmitted by the UE are transmitted in consecutive RB set(s). For example, the specific inter-UE physical shared feedback channel transmission (e.g., PSFCH transmission) may be a dummy signal, an inter-UE physical shared feedback channel transmission (e.g., PSFCH transmission) for other HARQ-ACK feedback, and/or may belong to a common PRB or a common interlace.

For example, when a UE transmits a plurality of inter-UE physical shared feedback channel (e.g., PSFCH) belonging to a plurality of RB sets, when a UE has channel sensing results for a part of the plurality of RB sets that are idle, and/or when the plurality of RB sets whose results are idle is discontinuous, the UE may additionally omit inter-UE physical shared feedback channel transmission (e.g., PSFCH transmission) for a part of the discontinuous RB sets (such that actually transmitted inter-UE physical shared feedback channel (e.g., PSFCH) exist within continuous RB set(s)).

For example, the finally transmitted inter-UE physical shared feedback channel (e.g., PSFCH) and/or RB set may include the inter-UE physical shared feedback channel (e.g., PSFCH) having the smallest priority value. For example, the finally transmitted inter-UE physical shared feedback channel (e.g., PSFCH) and/or RB set may correspond to the one having the largest number of RB sets. For example, the finally transmitted inter-UE physical shared feedback channel (e.g., PSFCH) and/or RB set may be the RB set having the largest number of transmittable inter-UE physical shared feedback channels (e.g., PSFCH).

For example, a UE may set the priority for an inter-UE physical shared feedback channel transmission (e.g., PSFCH transmission) using a type 2 channel access procedure or an inter-UE physical shared feedback channel transmission (e.g., PSFCH transmission) inside COT or using COT to be higher than other inter-UE physical feedback channel transmission (e.g., PSFCH transmission).

For example, the above operation may be applied when the inter-UE priorities (e.g., SL priorities) among the inter-UE physical shared feedback channel transmissions (e.g., PSFCH transmission) are the same. For example, the above operation may also be applied when the inter-UE priorities (e.g., SL priorities) among the inter-UE physical shared feedback channel transmissions (e.g., PSFCH transmission) are different.

For example, the UE may perform channel sensing operations for each corresponding RB set(s) for a plurality of inter-UE physical shared feedback channel transmissions (e.g., PSFCH transmission), and may preferentially select a specific RB set group composed of consecutive RB set(s) for the RB sets whose channel sensing results are idle.

For example, the UE may not expect that a PRB set for inter-UE physical shared feedback channel (e.g., PSFCH) resources is (pre-)configured in discontinuous RB sets. For example, the UE may expect that a PRB set for inter-UE physical shared feedback channel (e.g., PSFCH) resources is (pre-)configured in consecutive RB sets and/or within guard band PRBs between the RB sets.

For example, for a plurality of inter-UE physical shared feedback channel (e.g., PSFCH) occasions corresponding to the same inter-UE physical shared channel (e.g., PSSCH) resource (slot), if the UE has (successfully) received the inter-UE physical shared feedback channel (e.g., PSFCH) for the transmitting inter-UE physical shared channel (e.g., PSSCH) in the first inter-UE physical shared feedback channel (e.g., PSFCH) occasion(s), the UE may not use the received inter-UE physical shared feedback channel (e.g., PSFCH) and a priority value thereof when determining a priority for inter-UE physical shared feedback channel transmission/reception collision in the second inter-UE physical shared feedback channel (e.g., PSFCH) occasion(s).

Alternatively, for example, if the UE has (successfully) received an inter-UE physical shared feedback channel (e.g., PSFCH) for a transmitting inter-UE physical shared channel (e.g., PSSCH) in the first inter-UE physical shared feedback channel (e.g., PSFCH) occasion(s), the UE may not monitor transmission of the inter-UE physical shared feedback channel (e.g., PSFCH) related to the priority value of the received inter-UE physical shared feedback channel (e.g., PSFCH) in reception occasion(s) after then. For example, in the above, the second inter-UE physical shared feedback channel (e.g., PSFCH) occasion(s) may be located at a later time point than the first inter-UE physical shared feedback channel (e.g., PSFCH) occasion(s).

For example, for a plurality of inter-UE physical shared feedback channel (e.g., PSFCH) occasions corresponding to the same inter-UE physical shared channel (e.g., PSSCH) resource (slot), if the UE has (successfully) transmitted an inter-UE physical shared feedback channel (e.g., PSFCH) for a received inter-UE physical shared channel (e.g., PSSCH) in the first inter-UE physical shared feedback channel (e.g., PSFCH) occasion(s), the UE may not use the transmitted inter-UE physical shared feedback channel (e.g., PSFCH) and its associated priority value when determining the priority for collision of inter-UE physical shared feedback channel transmission (e.g., PSFCH transmission)/reception and inter-UE physical shared feedback channel transmission (e.g., PSFCH transmission)/transmission in the second inter-UE physical shared feedback channel (e.g., PSFCH) occasion(s).

For example, in the above, the second inter-UE physical shared feedback channel (e.g., PSFCH) occasion(s) may be located at a later time point than the first inter-UE physical shared feedback channel (e.g., PSFCH) occasion(s). For example, in the above, the second inter-UE physical shared feedback channel (e.g., PSFCH) occasion(s) may be included at the same time point as the first inter-UE physical shared feedback channel (e.g., PSFCH) occasion(s) and/or may correspond to different RB set(s).

For example, in the above, the priority of the transmitted inter-UE physical shared feedback channel (e.g., PSFCH) in the second inter-UE physical shared feedback channel (e.g., PSFCH) occasion(s) may be lower than the priority of another non-transmitted inter-UE physical shared feedback channel transmission (e.g., PSFCH transmission). That is, even if the priority value of the non-transmitted inter-UE physical shared feedback channel (e.g., PSFCH) is greater than the priority value of the already transmitted inter-UE physical shared feedback channel (e.g., PSFCH), in the above situation, the priority of the non-transmitted inter-UE physical shared feedback channel (e.g., PSFCH) may be higher than that of the already transmitted one.

For example, the non-transmitted inter-UE physical shared feedback channel (e.g., PSFCH) may be due to a failure in channel sensing for a channel access procedure (e.g., LBT) and/or a drop caused by UL/SL prioritization and/or a drop caused by prioritization between inter-UE physical shared feedback channel transmission (e.g., PSFCH transmission)/transmission and/or transmission/reception.

For example, a non-transmitted inter-UE physical shared feedback channel (e.g., PSFCH) due to a failure in channel sensing for a channel access procedure (e.g., LBT) may correspond to a current inter-UE physical shared feedback channel (e.g., PSFCH) occasion time point and/or may correspond to one or more previous inter-UE physical shared feedback channel (e.g., PSFCH) occasion time points including the current one.

For example, in the same inter-UE physical shared feedback channel (e.g., PSFCH) occasion, for inter-UE physical shared feedback channel (e.g., PSFCH) resource set(s) corresponding to each inter-UE physical shared channel (e.g., PSSCH)-to-inter-UE physical shared feedback channel (e.g., PSFCH) timing, when the UE transmits a plurality of inter-UE physical shared feedback channels (e.g., PSFCHs) (for a specific RB set), a common PRB and/or a common interlace may be shared or may be the same. That is, when dedicated PRB(s) (i.e., resources on which inter-UE (e.g., SL) HARQ-ACK information is transmitted) for different (reference) inter-UE physical shared channel (e.g., PSSCH)-to-inter-UE physical shared feedback channel (e.g., PSFCH) timings are separated/selected separately for each inter-UE physical shared feedback channel transmission (e.g., PSFCH transmission), a common interlace and/or a common PRB may be selected or may exist per inter-UE physical shared feedback channel (e.g., PSFCH) occasion and/or per RB set.

For example, when a UE transmits a plurality of inter-UE physical shared feedback channels (e.g., PSFCHs) for different (reference) inter-UE physical shared channel (e.g., PSSCH)-to-inter-UE physical shared feedback channel (e.g.,

PSFCH) timings, a common interlace and/or a common PRB may separately exist/be allocated for each inter-UE physical shared feedback channel transmission (e.g., PSFCH transmission).

For example, when a UE transmits a plurality of inter-UE physical shared feedback channels (e.g., PSFCHs) for different (reference) inter-UE physical shared channel (e.g., PSSCH)-to-inter-UE physical shared feedback channel (e.g., PSFCH) timings, a sequence for a common interlace and/or a common PRB may be different per inter-UE physical shared feedback channel transmission (e.g., PSFCH transmission), and/or may be generated based on a separately (pre-) configured ID.

Meanwhile, in a common interlace transmission, when the same resource is used for a plurality of UEs, and when a receive power for a common PRB is greater than a receive power for a dedicated PRB, detection of HARQ-ACK information transmitted through a dedicated PRB may be impossible or inefficient due to a near-far problem.

For example, a UE may allocate transmit power for a common interlace to be less than or equal to a predefined or (pre-)configured upper limit. For example, a transmit power value for the common interlace or the upper limit thereof may be determined based on a transmit power allocation value for a dedicated PRB (e.g., by multiplying a (pre-)configured scaling value or ratio value and/or applying a (pre-)configured offset value).

For example, for simultaneous transmission of a plurality of inter-UE physical shared feedback channels (e.g., PSFCHs), a UE may perform power allocation for a common interlace with reference to a single inter-UE physical shared feedback channel transmission (e.g., PSFCH transmission), and in this case, the single inter-UE physical shared feedback channel transmission used as the reference may correspond to one having the smallest or largest priority value, and/or one having the smallest transmit power or amount of power allocated to a dedicated PRB.

According to an embodiment of the present disclosure, a priority-based operation according to the spirit of the present disclosure may be extended and applied to a CAPC-based operation, and/or when replaced with CAPC, an inequality sign may be interpreted in the opposite manner.

In various embodiments of the present disclosure, a transmission support scheme within a contiguous RB set for an inter-UE physical shared feedback channel (e.g., PSFCH) may be extended and applied to a transmission support scheme within a contiguous RB set for an inter-UE synchronization signal block (e.g., S-SSB). In such a case, a priority or the lowest priority value for the inter-UE physical shared feedback channel (e.g., PSFCH) may be replaced with an operation based on a priority value (e.g., the smallest or largest value when there are multiple) for a default inter-UE synchronization signal block (e.g., S-SSB), an inter-UE synchronization signal block (e.g., S-SSB) for default resources, an inter-UE synchronization signal block (e.g., S-SSB) for synchronization purposes, and/or a sidelink (SL) channel transmission adjacent to the inter-UE synchronization signal block (e.g., S-SSB).

Meanwhile, in an inter-UE communication (e.g., SL communication) mode 1 operation, a UE transmitting an inter-UE physical channel (e.g., PSCCH/PSSCH) may report inter-UE communication (e.g., SL communication) HARQ-ACK feedback information received from a UE receiving the inter-UE physical channel (e.g., PSCCH/PSSCH) to a base station. When a timing between transmission of the inter-UE physical channel (e.g., PSCCH/PSSCH) and transmission of the inter-UE physical shared feedback channel (e.g., PSFCH transmission) is changeable, a method for reporting inter-UE communication (e.g., SL communication) HARQ-ACK feedback may need to be changed.

For example, a UE may transmit a report of inter-UE communication (e.g., SL communication) HARQ-ACK to a base station via UL transmission, with reference to actual inter-UE physical shared feedback channel (e.g., PSFCH) occasions for the last inter-UE communication (e.g., SL communication) resource indicated through control information (e.g., DCI) and/or the last inter-UE communication (e.g., SL communication) resource within a CG period.

For example, in order for a base station to know when a report of inter-UE communication (e.g., SL communication) HARQ-ACK is to be transmitted via UL transmission, the base station may indicate, through control information (e.g., DCI), and/or configure through RRC, information for inter-UE physical shared feedback channel (e.g., PSFCH) occasions for at least the last inter-UE communication (e.g., SL communication) resource.

For example, information for inter-UE physical shared feedback channel (e.g., PSFCH) occasion(s) for inter-UE communication (e.g., SL communication) resources other than the last inter-UE communication (e.g., SL communication) resource may be independently indicated through control information (e.g., DCI) and/or configured through RRC, or common information for the last inter-UE communication (e.g., SL communication) resource may be applied, and/or the inter-UE communication (e.g., SL communication) resources other than the last one may be determined by a UE transmitting an inter-UE physical channel (e.g., PSCCH/PSSCH). For example, in the case of indication method through the control information (e.g., DCI), it may be jointly coded with PUCCH timing indication.

For example, a UE may transmit inter-UE communication (e.g., SL communication) HARQ-ACK report via UL with reference to a specific inter-UE physical shared feedback channel (e.g., PSFCH) occasion candidate for the last inter-UE communication (e.g., SL communication) resource indicated in control information (e.g., DCI) and/or the last inter-UE communication (e.g., SL communication) resource within a CG period.

For example, the specific inter-UE physical shared feedback channel (e.g., PSFCH) occasion candidate may be (pre-)configured as the earliest or the latest in time among inter-UE physical shared feedback channel (e.g., PSFCH) occasion candidates.

For example, a base station may set/determine a reference point (an index of inter-UE physical shared feedback channel (e.g., PSFCH) occasions) for a PUCCH transmission time point through indication by control information (e.g., DCI) and/or RRC configuration and/or (pre-)configuration.

Meanwhile, when inter-UE physical shared channel (e.g., PSSCH)-to-inter-UE physical shared feedback channel (e.g., PSFCH) timing is changeable, a size of a HARQ-ACK codebook for inter-UE communication (e.g., SL communication) HARQ-ACK feedback report may also need to be changed.

For example, when determining a HARQ-ACK codebook size, the number of candidates for inter-UE physical shared channel (e.g., PSSCH)-to-inter-UE physical shared feedback channel (e.g., PSFCH) timing may additionally be considered. An inter-UE physical shared feedback channel (e.g., PSFCH)-to-PUCCH timing value used for determining an inter-UE communication (e.g., SL communication) HARQ-ACK codebook and its size may be determined based on inter-UE physical shared channel (e.g., PSSCH)-to-inter-UE physical shared feedback channel (e.g., PSFCH) timing, inter-UE physical shared feedback channel (e.g., PSFCH)-to-PUCCH timing, first inter-UE physical shared feedback channel (e.g., PSFCH)-to-actual inter-UE physical shared feedback channel (e.g., PSFCH) timing, and/or a sum of combinations thereof.

For example, the first inter-UE physical shared feedback channel (e.g., PSFCH) timing may be a time point for a first inter-UE physical shared feedback channel (e.g., PSFCH) occasion determined based on a minimum inter-UE physical shared channel (e.g., PSSCH)-to-inter-UE physical shared feedback channel (e.g., PSFCH) timing and/or an inter-UE physical shared feedback channel (e.g., PSFCH) resource period for the inter-UE physical shared channel (e.g., PSSCH), and/or may be an earlier time point among candidates for a value of the inter-UE physical shared channel (e.g., PSSCH)-to-inter-UE physical shared feedback channel (e.g., PSFCH) timing.

For example, the actual inter-UE physical shared feedback channel (e.g., PSFCH) timing may be a time point of an inter-UE physical shared feedback channel (e.g., PSFCH) occasion indicated at least through inter-UE communication control information (e.g., SCI). An inter-UE physical shared feedback channel (e.g., PSFCH)-to-PUCCH timing value used for determining an inter-UE communication (e.g., SL communication) HARQ-ACK codebook and its size may be replaced with a sum of a first inter-UE physical shared feedback channel (e.g., PSFCH)-to-actual inter-UE physical shared feedback channel (e.g., PSFCH) timing and inter-UE physical shared feedback channel (e.g., PSFCH)-to-PUCCH timing, and an inter-UE communication (e.g., SL communication) HARQ-ACK codebook size may be determined based on candidate values for the sum.

For example, when determining an inter-UE communication (e.g., SL communication) HARQ-ACK codebook and its size, inter-UE physical shared feedback channel (e.g., PSFCH) occasions may be determined for each candidate value of inter-UE physical shared feedback channel (e.g., PSFCH)-to-PUCCH timing value, and/or HARQ-ACK bits for inter-UE physical shared channel (e.g., PSSCH) occasions may be generated/determined for each candidate value of inter-UE physical shared channel (e.g., PSSCH)-to-inter-UE physical shared feedback channel (e.g., PSFCH) timing value from the inter-UE physical shared feedback channel (e.g., PSFCH) occasions.

An embodiment of the present disclosure may be limited to being applied when an inter-UE communication (e.g., SL communication) HARQ-ACK codebook type is semi-static.

For example, in the semi-static case, a HARQ-ACK bit corresponding to an inter-UE physical shared channel (e.g., PSSCH) that is not actually scheduled may be determined/set to NACK or DTX.

Meanwhile, for the purpose of maintaining a COT and/or multiple consecutive slot transmission (e.g., MCSt), instead of dynamically using inter-UE physical shared feedback channel (e.g., PSFCH) resources, a UE may transmit a separate signal on inter-UE physical shared feedback channel (e.g., PSFCH) occasions.

For example, within a multiple consecutive slot transmission (e.g., MCSt), for a subsequent inter-UE communication (e.g., SL communication) channel transmission (from an inter-UE physical shared feedback channel (e.g., PSFCH) occasion), a UE may attempt channel occupancy through a CPE over all or a part of the allocated frequency, in a manner including a time resource region for the inter-UE physical shared feedback channel (e.g., PSFCH) and/or a CPE duration length for the inter-UE physical shared feedback channel (e.g., PSFCH).

For example, within a multiple consecutive slot transmission (e.g., MCSt), a UE may perform inter-UE physical shared feedback channel transmission (e.g., PSFCH transmission) preferentially than inter-UE physical shared feedback channel (e.g., PSFCH) reception for an inter-UE physical shared feedback channel (e.g., PSFCH) occasion. This is because, when performing inter-UE physical shared feedback channel (e.g., PSFCH) reception, an actual inter-UE physical shared feedback channel transmission (e.g., PSFCH transmission) toward the UE may not occur due to a prioritization procedure and/or a failure in channel sensing for the channel access procedure (e.g., LBT).

For example, when inter-UE physical shared feedback channel (e.g., PSFCH) resources are located within a COT (in terms of time and/or frequency) initialized by the UE and/or in the temporal middle of the UE's multiple consecutive slot transmission (e.g., MCSt), and are a super set in the frequency domain, partially or fully overlapping, and/or located within a shared COT (in terms of time and/or frequency) that is received or used by the UE, the UE may attempt inter-UE physical shared feedback channel transmission (e.g., PSFCH transmission) in inter-UE physical shared feedback channel (e.g., PSFCH) resources (in terms of time and/or frequency) other than the RB set scheduled for inter-UE physical shared feedback channel transmission (e.g., PSFCH transmission) (for control information delivery purposes).

For example, an inter-UE physical shared feedback channel (e.g., PSFCH) that is transmitted (solely) for purposes other than control information delivery (e.g., for maintaining a COT or minimizing a time gap within a multiple consecutive slot transmission (e.g., MCSt)) may be configured with a common PRB and/or a common interlace.

In the above, determination of whether to attempt inter-UE physical shared feedback channel transmission (e.g., PSFCH transmission) according to the COT may be limited to being applied when one or more inter-UE physical shared feedback channel transmissions (e.g., PSFCH transmissions) satisfy COT usage conditions (e.g., limited CAPC value, EDT or maximum transmit power constraint, and/or inclusion of the COT-initiating UE in the target UE).

For example, a plurality of inter-UE physical shared feedback channel transmissions (e.g., PSFCH transmissions) by a UE may be limited to being performed when a power value of each inter-UE physical shared feedback channel (e.g., PSFCH), or a sum of power values of inter-UE physical shared feedback channels (e.g., PSFCH) within an RB set, is equal to or greater than or exceeds a certain level (e.g., a pre-configured value).

And/or, for example, if a power value of each inter-UE physical shared feedback channel (e.g., PSFCH), or a sum of power values of inter-UE physical shared feedback channels (e.g., PSFCH) within an RB set, is equal to or less than or lower than a certain level, an attempt to perform inter-UE physical shared feedback channel transmission (e.g., PSFCH transmission) for purposes other than control information delivery may be omitted.

For example, when inter-UE physical shared feedback channel (e.g., PSFCH) resources (in terms of time and/or frequency) are larger than a frequency region or RB set region for a COT, the UE may preferentially and/or restrictively perform transmission in inter-UE physical shared feedback channel (e.g., PSFCH) resources for all or a part of the RB sets associated with the COT (according to the above conditions, etc.), and/or may preferentially and/or restrictively perform transmission in inter-UE physical shared feedback channel (e.g., PSFCH) resources for all or a part of the frequency region or RB sets occupied after the UE's inter-UE physical shared feedback channel (e.g., PSFCH) time resource, for a multiple consecutive slot transmission (e.g., MCSt).

According to an embodiment of the present disclosure, channel occupancy for inter-UE physical shared feedback channel (e.g., PSFCH) resources may be performed when the UE does not perform an inter-UE physical shared feedback channel transmission (e.g., PSFCH transmission) operation and/or an inter-UE physical shared feedback channel (e.g., PSFCH) reception operation at the inter-UE physical shared feedback channel (e.g., PSFCH) occasion.

Various schemes of the embodiment of the present disclosure may be applied differently depending on a HARQ-ACK state and a HARQ-ACK feedback option. For example, there may be additional prioritization rules.

According to an embodiment of the present disclosure, various schemes may be applied and/or (pre-)configured differently depending on whether inter-UE physical shared feedback channel (e.g., PSFCH) occasions for an inter-UE physical shared channel (e.g., PSSCH) are single or multiple, and/or depending on the number of inter-UE physical shared feedback channel (e.g., PSFCH) occasions.

According to an embodiment of the present disclosure, an RB index may be a PRB index or a CRB index.

According to an embodiment of the present disclosure, the scheme described for each inter-UE communication (e.g., SL communication) channel is not limited to the specifically mentioned inter-UE communication (e.g., SL communication) channel, and may be extended and applied to different inter-UE communication (e.g., SL communication) channels as well.

According to an embodiment of the present disclosure, various schemes may be applied differently depending on a subcarrier spacing size.

According to an embodiment of the present disclosure, various schemes may be applied differently depending on a type of inter-UE communication (e.g., SL communication) channel.

According to an embodiment of the present disclosure, various schemes may be applied differently depending on a CAPC value and/or an inter-UE priority value (e.g., inter-UE priority (e.g., SL priority) value).

According to an embodiment of the present disclosure, various schemes may be applied differently depending on an RB set, and/or a size of the RB set, and/or whether a guard band exists between RB sets.

According to an embodiment of the present disclosure, various schemes may be applied differently depending on whether it is inside and/or outside a COT.

Meanwhile, in an unlicensed band, inter-UE transmission (e.g., SL transmission) may be performed in a form of being transmitted through a plurality of separated RBs according to the specification.

Meanwhile, for uplink channel transmission in an unlicensed band, a UE may be provided with information for a single or a plurality of RB sets and a single or a plurality of interlaces from a base station, and a final transmission resource may be determined as an intersection of RBs within the provided RB set(s) and RBs corresponding to the provided interlace(s).

Meanwhile, an interlace may be defined on a common RB (CRB, Common RB) grid, and each interlace may be a set of RBs spaced by 10 RBs in the case of 15 kHz, or a set of RBs spaced by 5 RBs in the case of 30 kHz on the CRB grid. The interlace index may be determined with reference to an RB offset from CRB #0.

Meanwhile, in the case of inter-UE communication (e.g., SL communication), sensing and/or resource (re) selection is performed in units of subchannels. Accordingly, it may be required that a subchannel be represented in the form of an interlace and/or an RB set. Through this, an advantage of maximizing reuse of subchannel-based sensing operations and/or resource reservation methods may be obtained.

Meanwhile, in an unlicensed band, inter-UE transmission (e.g., SL transmission) may, according to the specification, be performed such that all or part of an inter-UE synchronization signal block (e.g., S-SSB) is transmitted in an interlace structure, transmitted through a plurality of separated RB groups, or repeatedly transmitted (in the frequency domain).

Meanwhile, as part of a method for satisfying an Occupied Channel Bandwidth (OCB) requirement, an inter-UE synchronization signal block (e.g., S-SSB) consisting of 11 RBs may be repeatedly transmitted in the frequency domain.

Meanwhile, in the case of an OCB requirement, it may be temporarily omitted within a COT (Channel Occupancy Time) interval, and in this case, the UE may perform mapping for part of an inter-UE synchronization signal block (e.g., S-SSB) (for example, an inter-UE primary synchronization signal (e.g., S-PSS) and/or an inter-UE secondary synchronization signal (e.g., S-SSS), and/or a remaining portion of an inter-UE physical broadcast channel (e.g., PSBCH) after the inter-UE primary synchronization signal (e.g., S-PSS) and the inter-UE secondary synchronization signal (e.g., S-SSS)) to 11 PRBs, for another part of the inter-UE synchronization signal block (e.g., S-SSB) (for example, the inter-UE physical broadcast channel (e.g., PSBCH) prior to the inter-UE primary synchronization signal (e.g., S-PSS) and the inter-UE secondary synchronization signal (e.g., S-SSS), and/or all or a part of the inter-UE physical broadcast channel (e.g., PSBCH)) the UE may perform mapping in an interlace structure, a frequency-domain repetition structure, and/or to separated PRB groups.

Meanwhile, when the OCB requirement is temporarily omitted as described above, in order to still maintain a bandwidth of 2 MHz or more, a form may be supported in which an inter-UE physical broadcast channel (e.g., PSBCH) surrounds an inter-UE primary synchronization signal (e.g., S-PSS) and/or an inter-UE secondary synchronization signal (e.g., S-SSS), or part of an inter-UE synchronization signal block (e.g., S-SSB) may be repeatedly transmitted in the frequency domain beyond 11 PRBs.

Meanwhile, when guard REs exist between frequency-domain repetitions of an inter-UE primary synchronization signal (e.g., S-PSS) and/or an inter-UE secondary synchronization signal (e.g., S-SSS), a difference in the used frequency domain and power spectral density (PSD) between the inter-UE primary synchronization signal (e.g., S-PSS) and/or the inter-UE secondary synchronization signal (e.g., S-SSS) and the inter-UE physical broadcast channel (e.g., PSBCH) may be greater than or equal to a certain level, and in such a case, a transient period may exist between the respective time intervals.

For example, when a UE sets a transient period between a preceding inter-UE physical broadcast channel (e.g., PSBCH) symbol and an inter-UE primary synchronization signal (e.g., S-PSS) and/or an inter-UE secondary synchronization signal (e.g., S-SSS) symbol, the transient period may be designated within the symbol region of the inter-UE physical broadcast channel (e.g., PSBCH).

For example, when a UE sets a transient period between an inter-UE primary synchronization signal (e.g., S-PSS) and/or an inter-UE secondary synchronization signal (e.g., S-SSS) symbol and a subsequent inter-UE physical broadcast channel (e.g., PSBCH) symbol, the transient period may be designated within the symbol region of the inter-UE physical broadcast channel (e.g., PSBCH).

For example, when a UE sets a transient period between a preceding inter-UE physical broadcast channel (e.g., PSBCH) symbol and an inter-UE primary synchronization signal (e.g., S-PSS) and/or an inter-UE secondary synchronization signal (e.g., S-SSS) symbol, the UE may additionally use the inter-UE primary synchronization signal (e.g., S-PSS) and/or inter-UE secondary synchronization signal (e.g., S-SSS) symbols to designate the transient period within the inter-UE primary synchronization signal (e.g., S-PSS) and/or inter-UE secondary synchronization signal (e.g., S-SSS) symbols.

For example, when a UE sets a transient period between an inter-UE primary synchronization signal (e.g., S-PSS) and/or an inter-UE secondary synchronization signal (e.g., S-SSS) symbol and a subsequent inter-UE physical broadcast channel (e.g., PSBCH) symbol, the UE may additionally use the inter-UE primary synchronization signal (e.g., S-PSS) and/or inter-UE secondary synchronization signal (e.g., S-SSS) symbols to designate the transient period within the inter-UE primary synchronization signal (e.g., S-PSS) and/or inter-UE secondary synchronization signal (e.g., S-SSS) symbols.

For example, a UE may use all or part of lower-region guard REs and/or upper-region guard REs for frequency repetition of an inter-UE primary synchronization signal (e.g., S-PSS) and/or an inter-UE secondary synchronization signal (e.g., S-SSS) for transmission.

For example, for inter-UE synchronization signal block (e.g., S-SSB) frequency repetitions, all or part of guard REs between two inter-UE synchronization signal blocks (e.g., S-SSBs) which are contiguous in the frequency domain may be used by a UE as an inter-UE physical broadcast channel (e.g., PSBCH) transmission resource, and to the PSBCH transmission resource, an inter-UE broadcast channel (e.g., PSBCH) may be mapped in rate-matching scheme or repetitions scheme. For example, the repetition scheme may include an operation of copying another inter-UE physical broadcast channel (e.g., PSBCH) symbol or a coded symbol value that is mapped to the frequency region corresponding to guard REs of adjacent inter-UE physical broadcast channel (e.g., PSBCH) symbol.

For example, for inter-UE synchronization signal blocks (e.g., S-SSB) frequency repetitions, a UE may use a specific sequence value to all or part of guard REs between two inter-UE synchronization signal block (e.g., S-SSB) repetitions which are contiguous in the frequency region, and/or the sequence value may be a sequency designed to reduce the PAPR for an inter-UE primary synchronization signal (e.g., S-PSS) repetition and/or an inter-UE secondary synchronization signal (e.g., S-SSS) repetition.

For example, a sequence mapped to the guard band REs may vary depending on an inter-UE communication identifier (e.g., SLID) and/or N_ID_2 and/or N_ID_1 values, which are referenced when generating an inter-UE primary synchronization signal (e.g., S-PSS) sequence and/or an inter-UE secondary synchronization signal (e.g., S-SSS) sequence.

For example, in frequency-domain repetitions of an inter-UE primary synchronization signal (e.g., S-PSS) and/or an inter-UE secondary synchronization signal (e.g., S-SSS), for a starting repetition and/or an ending repetition (of a group of consecutive frequency repetitions), lower-frequency region guard REs and/or upper-frequency region guard REs of the inter-UE primary synchronization signal (e.g., S-PSS) and/or the inter-UE secondary synchronization signal (e.g., S-SSS) may still not be used for transmission.

Meanwhile, when transmitting an inter-UE synchronization signal block (e.g., S-SSB), a UE may use a shared COT or an initialized COT, and in such a case, may transmit the inter-UE synchronization signal block (e.g., S-SSB) in a manner that omits the OCB requirement and/or ensures a frequency domain of 2 MHz or more.

Meanwhile, an inter-UE synchronization signal block (e.g., S-SSB) may be expected to be used in an SFN structure by different UEs on the same resource. Accordingly, even when different UEs transmit inter-UE synchronization signal blocks (e.g., S-SSBs) with different structures, it may be designed such that SFN is maximally supported.

According to one embodiment of the present disclosure, a temporary OCB exemption operation may be applied differently per UE depending on whether the inter-UE synchronization signal block (e.g., S-SSB) transmission is within a COT interval or outside the COT.

For example, when the OCB exemption is applied, transmission resources for an inter-UE synchronization signal block (e.g., S-SSB) may be a subset of the transmission resources for the inter-UE synchronization signal block (e.g., S-SSB) when the OCB exemption is not applied.

For example, when the OCB exemption is not applied, in the transmission of an inter-UE synchronization signal block (e.g., S-SSB), mapping of the same coded bits or symbols may be possible such that SFN is mutually transmitted between UEs in the transmission resources for the inter-UE synchronization signal block (e.g., S-SSB) where the OCB exemption is applied.

For example, in the case of mapping of an inter-UE synchronization signal block (e.g., S-SSB) to the default 11 RBs or when the OCB exemption is applied, a UE may perform mapping for remaining resources in repetition or rate matching, after it performs inter-UE synchronization signal block (e.g., S-SSB) mapping for an inter-UE synchronization signal block (e.g., S-SSB) transmission.

For example, when OCB exemption is not applied, a UE may perform inter-UE synchronization signal block (e.g., S-SSB) mapping for an inter-UE synchronization signal block (e.g., S-SSB) transmission, and/or when OCB exemption is applied, the UE may use remaining bits excluding coded bits or symbol and/or guard REs of an inter-UE synchronization signal block (e.g., S-SSB) transmission resource in a transmission, and/or punctuate the remaining.

According to an embodiment of the present disclosure, a structure of an inter-UE synchronization signal block (e.g., S-SSB) when the OCB exemption is not applied may be a structure that ensures that the allocated frequency is greater than or equal to 2 MHz.

For example, with respect to frequency repetition transmission of an inter-UE synchronization signal block (e.g., S-SSB), the number of repetitions, frequency, gap, and/or frequency domain may be (pre-)configured per inter-UE physical broadcast channel (e.g., PSBCH), per inter-UE primary synchronization signal (e.g., S-PSS), and/or per inter-UE secondary synchronization signal (e.g., S-SSS).

For example, the (pre-)configuration may be performed (differently) for each of inter-UE synchronization signal block (e.g., S-SSB) transmission within a COT and inter-UE synchronization signal block (e.g., S-SSB) transmission outside the COT or at COT initialization.

For example, through (pre-)configuration, the number of repetitions and/or frequency gap and/or frequency domain for an inter-UE physical broadcast channel (e.g., PSBCH) may be determined to satisfy occupancy of 80% or more of the bandwidth (BW), and/or the number of repetitions and/or frequency gap and/or frequency domain for an inter-UE primary synchronization signal (e.g., S-PSS) and/or an inter-UE secondary synchronization signal (e.g., S-SSS) may be determined to satisfy occupancy of 80% or more of the BW and/or a BW of 2 MHz or more.

For example, bit/symbol mapping coded for inter-UE physical broadcast channel (e.g., PSBCH) repetition resources may be based on a repetition scheme and/or rate matching. For example, in the case of inter-UE physical broadcast channel (e.g., PSBCH) transmission using a COT, the number of repetitions and/or frequency gap and/or frequency domain may be determined through (pre-)configuration to satisfy a bandwidth (BW) of 2 MHz or more.

For example, in the frequency domain, a start position of an inter-UE synchronization signal block (e.g., S-SSB), the lowest PRB repetition of the lowest inter-UE synchronization signal block (e.g., S-SSB), the highest PRB repetition of the highest inter-UE synchronization signal block (e.g., S-SSB), the number of inter-UE synchronization signal block (e.g., S-SSB) repetitions, and/or a frequency gap between inter-UE synchronization signal block (e.g., S-SSB) repetitions may be (pre-)configured to satisfy occupancy of 80% or more of the BW, in reference to inter-UE physical broadcast channel (e.g., PSBCH) symbols.

For example, in the frequency domain, a start position of an inter-UE synchronization signal block (e.g., S-SSB), the lowest PRB repetition of the lowest inter-UE synchronization signal block (e.g., S-SSB), the highest PRB repetition of the highest inter-UE synchronization signal block (e.g., S-SSB), the number of inter-UE synchronization signal block (e.g., S-SSB) repetitions, and/or a frequency gap between inter-UE synchronization signal block (e.g., S-SSB) repetitions may be (pre-)configured to satisfy occupancy of 80% or more of the bandwidth (BW), based on the lowest RE position (of the lowest inter-UE synchronization signal block (e.g., S-SSB) repetition) and the highest RE position (of the highest inter-UE synchronization signal block (e.g., S-SSB) repetition), in which an actual sequence is mapped, excluding guard PRBs, with reference to inter-UE primary synchronization signal (e.g., S-PSS) and/or inter-UE secondary synchronization signal (e.g., S-SSS) symbols.

And/or, for example, in such a case, inter-UE physical broadcast channel (e.g., PSBCH) symbols may be (pre-)configured to still be present within an RB set. For example, in such a case, for guard PRBs outside the RB set or between RB sets in the inter-UE physical broadcast channel (e.g., PSBCH) symbols, mapping of the inter-UE physical broadcast channel (e.g., PSBCH) may be punctured, and/or the corresponding resources may be truncated, and rate matching may be performed for a specific inter-UE physical broadcast channel (e.g., PSBCH) repetition over the resources within the RB set.

For example, mapping to guard band PRBs between RB sets may be allowed for part of an inter-UE synchronization signal block (e.g., S-SSB), and/or all or part of repetitions of an inter-UE primary synchronization signal (e.g., S-PSS), and/or an inter-UE secondary synchronization signal (e.g., S-SSS), and/or an inter-UE physical broadcast channel (e.g., PSBCH), or for some PRBs thereof.

Meanwhile, between frequency-domain repetitions of an inter-UE synchronization signal block (e.g., S-SSB), different precoding or phase shifts may be applied by the transmitting UE (e.g., for the purpose of PAPR reduction), and in such a case, simply combining the frequency-domain repetitions of the inter-UE synchronization signal block (e.g., S-SSB) at the receiving UE side for sequence detection and/or inter-UE physical broadcast channel (e.g., PSBCH) decoding may not be appropriate.

For example, the receiving UE of frequency-domain inter-UE synchronization signal block (e.g., S-SSB) repetitions may not perform soft combining for multiple inter-UE synchronization signal block (e.g., S-SSB) repetitions. For instance, the receiving UE of frequency-domain inter-UE synchronization signal block (e.g., S-SSB) repetitions may perform soft combining for repetitions within the same RB set, and/or may not perform soft combining for repetitions between different RB sets.

That is, the fact that soft combining is not performed as described above may mean that the UE performs sequence detection and inter-UE physical broadcast channel (e.g., PSBCH) decoding for each inter-UE synchronization signal block (e.g., S-SSB) repetition or repetition group, that different inter-UE synchronization signal block (e.g., S-SSB) repetitions or repetition groups may not share the same channel, and/or that only the same inter-UE synchronization signal block (e.g., S-SSB) repetition or repetition group may share a channel.

For example, the group of inter-UE synchronization signal block (e.g., S-SSB) repetitions for which soft combining may be performed and/or a channel may be shared, and/or the above relationship, may be (pre-)configured. For example, based on the (pre-)configured value, it may be possible/allowed for the receiving UE to perform soft combining for a plurality of inter-UE synchronization signal block (e.g., S-SSB) repetitions to perform sequence detection and/or inter-UE physical broadcast channel (e.g., PSBCH) decoding.

According to an embodiment of the present disclosure, the transmission and/or reception of inter-UE synchronization signal block (e.g., S-SSB) repetitions in the frequency domain may be limited to being performed within a specific RB set, and/or may be extended to being mapped to a plurality of RB sets, and/or, depending on these two cases, various schemes and combinations of embodiments of the present disclosure may differ.

According to an embodiment of the present disclosure, a specific RB set group and/or a specific interlace group may be (pre-)configured per inter-UE communication (e.g., SL communication) BWP and/or per resource pool, and may be determined in advance or selected by the UE such that information for the RB set group and/or interlace group is indicated via the inter-UE physical broadcast channel (e.g., PSBCH) (e.g., included in the content or indicated through the DMRS of the inter-UE physical broadcast channel (e.g., PSBCH)).

According to an embodiment of the present disclosure, an RB set group and/or an interlace group used for a synchronization signal may differ depending on a sequence seed value, an inter-UE communication (e.g., SL communication) ID value, and/or an index shift value. This is because a suitable RB set-interlace group combination may differ in terms of PAPR.

For example, inter-UE synchronization signal block (e.g., S-SSB) repetition resources may be preferentially allocated in an upward direction within an RB set from a default inter-UE synchronization signal block (e.g., S-SSB) according to a gap, and/or in the remaining inter-UE synchronization signal block (e.g., S-SSB) repetitions, repetition resources may be allocated in a downward direction within the RB set from the default inter-UE synchronization signal block (e.g., S-SSB) according to the gap.

For example, synchronization signal block (e.g., S-SSB) repetition resources may be preferentially allocated in a downward direction within the RB set from the default synchronization signal block (e.g., S-SSB) according to the gap, and/or synchronization signal block (e.g., S-SSB) repetition resources for the remaining synchronization signal blocks (e.g., S-SSBs) may be allocated in an upward direction within the RB set from the default synchronization signal block (e.g., S-SSB) according to the gap.

According to an embodiment of the present disclosure, the above method may be applied differently depending on the frequency location of the default inter-UE synchronization signal block (e.g., S-SSB) within the RB set.

For example, if the default inter-UE synchronization signal block (e.g., S-SSB) is located above the center frequency of the RB set, the synchronization signal block (e.g., S-SSB) repetition resource may be preferentially allocated in the upward direction from the default inter-UE synchronization signal block (e.g., S-SSB) within the RB set based on the gap, and/or the remaining synchronization signal block (e.g., S-SSB) repetitions may be allocated in the downward direction from the default inter-UE synchronization signal block (e.g., S-SSB) within the RB set based on the gap.

For example, if the default inter-UE synchronization signal block (e.g., S-SSB) is located below the center frequency of the RB set, the synchronization signal block (e.g., S-SSB) repetition resource may be preferentially allocated in the downward direction from the default inter-UE synchronization signal block (e.g., S-SSB) within the RB set according to the gap, and/or the remaining synchronization signal block (e.g., S-SSB) repetitions may be allocated in the upward direction from the default inter-UE synchronization signal block (e.g., S-SSB) within the RB set according to the gap.

Meanwhile, the PRB position for an inter-UE physical control channel (e.g., PSCCH) may be mapped to the lowest subchannel of the lowest RB set for an inter-UE physical shared channel (e.g., PSSCH) allocated to the inter-UE physical control channel (e.g., PSCCH).

For example, the PRB position for an inter-UE physical control channel (e.g., PSCCH) may be sequentially mapped starting from the lowest PRB of the lowest subchannel of the lowest RB set, and if the subchannel includes a PRB of a guard band between RB sets, the mapping of the inter-UE physical control channel (e.g., PSCCH) may be canceled.

For example, the PRB positions for an inter-UE physical control channel (e.g., PSCCH) may be sequentially mapped starting from the lowest PRB of the lowest subchannel, and if the PRB region for the inter-UE physical control channel (e.g., PSCCH) overlaps with a PRB of a guard band between RB sets, the mapping of the inter-UE physical control channel (e.g., PSCCH) may be canceled.

According to an embodiment of the present disclosure, the PRB position for an inter-UE physical control channel (e.g., PSCCH) may vary depending on whether the subchannel includes a PRB of a guard band.

For example, when a subchannel includes a PRB of a guard band, the inter-UE physical control channel (e.g., PSCCH) may be mapped to the remaining PRBs within the subchannel, excluding the guard band PRB.

For example, in the above case, the mapping of the inter-UE physical control channel (e.g., PSCCH) may be non-contiguous in the frequency domain. For instance, the mapping of the inter-UE physical control channel (e.g., PSCCH) may be limited to cases where the mapping is contiguous in the frequency domain and may be performed only for a specific RB set among a plurality of overlapping RB sets.

For example, the specific RB set may be the lowest RB set. For instance, the specific RB set may be determined such that the number of PRBs within the RB set and within the subchannel is greater than the number of PRBs for the inter-UE physical control channel (e.g., PSCCH).

For example, when the subchannel includes PRBs of the guard band and/or when the guard band PRB is located in the higher PRB direction of the subchannel, the PRBs for the inter-UE physical control channel (e.g., PSCCH) may be determined sequentially starting from the lowest PRB of the subchannel.

For example, when the subchannel includes PRBs of the guard band and/or when the guard band PRB is located in the lower PRB direction of the subchannel, the PRBs for the inter-UE physical control channel (e.g., PSCCH) may be determined sequentially starting from the highest PRB of the subchannel.

For example, in such a case, the UE may exclude, from the available resource set, candidate resources having the subchannel (in which no inter-UE physical control channel (e.g., PSCCH) resource exists) as a starting subchannel during a resource (re)selection procedure. Such exclusion operation may be performed after the UE sets the initial available resource set and/or before performing exclusion operations related to other reserved resources and/or exclusion operations related to resources linked to non-monitored slots. For example, the UE may not be required to monitor or may not perform monitoring of the inter-UE physical control channel (e.g., PSCCH) for the subchannel.

For example, in the case of contiguous RB-based transmission, if a subchannel is not confined within a specific RB set, the subchannel may be excluded from the resource pool or from the candidate resources, and/or, exceptionally, the excluded subchannel may be used for transmission when an adjacent subchannel is actually allocated.

Various embodiments of the present disclosure may be applied in different combinations depending on whether the transmission is inside or outside the channel occupancy time (COT). Various embodiments of the present disclosure may also be applied in different combinations depending on the type of the COT (e.g., whether it is semi-static form or in a form where it varies over time). Furthermore, various embodiments of the present disclosure may be applied in different combinations depending on the carrier, the presence or absence of guard between RB sets, or regulatory requirements.

According to an embodiment of the present disclosure, the manner in which the synchronization signal and the inter-UE physical broadcast channel (e.g., PSBCH) are transmitted may be applied differently depending on the region of inter-UE communication (e.g., SL communication) operation and regulatory requirements.

According to an embodiment of the present disclosure, the manner in which the synchronization signal and the inter-UE physical broadcast channel (e.g., PSBCH) are transmitted may be applied differently depending on the size of the subcarrier spacing.

According to an embodiment of the present disclosure, the manner in which the synchronization signal and the inter-UE physical broadcast channel (e.g., PSBCH) are transmitted may differ per inter-UE synchronization signal block (e.g., S-SSB) time resource (e.g., sl-SSB-TimeAllocation1, sl-SSB-TimeAllocation2, sl-SSB-TimeAllocation3).

The embodiments of the present disclosure may be different and/or (pre-)configured per resource pool and/or per transmission outside and/or inside of the resource pool and/or per QoS parameter and/or per CAPC and/or per SL priority and/or per inside or outside the COT (when COT initializing) and/or per transmit order in an MCSt and/or per SL channel type and/or per RB set and/or per SL BWP and/or per SL carrier and/or per congestion level and/or per transmission operation or reception operation and/or per transmit power level and/or per transmission time point and/or per channel access procedure type for a transmission and/or per failure ratio of channel sensing for a channel access procedure (e.g., LBT) and/or per whether it is a COT initiator UE or a COT responded UE or other UE and/or per cast type and/or per whether SL HARQ-ACK feedback is activated and/or per HARQ-ACK feedback option and/or per number of transmission attempts for the same information or TB.

For example, in various embodiments of the present disclosure, being (pre-)configured may be performed per resource pool and/or per transmission outside and/or inside of the resource pool and/or per QoS parameter and/or per CAPC and/or per SL priority and/or per inside or outside the COT (when COT initializing) and/or per transmit order in an MCSt and/or per SL channel type and/or per RB set and/or per SL BWP and/or per SL carrier and/or per congestion level and/or per transmission operation or reception operation and/or per transmit power level and/or per transmission time point and/or per channel access procedure type for a transmission and/or per failure ratio of channel sensing for a channel access procedure (e.g., LBT) and/or per whether it is a COT initiator UE or a COT responded UE or other UE and/or per cast type and/or per whether SL HARQ-ACK feedback is activated and/or per HARQ-ACK feedback option and/or per number of transmission attempts for the same information or TB.

For example, in a shared spectrum (e.g., unlicensed band), a UE may perform a channel sensing operation related to a channel access procedure (e.g., LBT operation) in order to secure a transmission opportunity. For example, the channel sensing operation may be performed over a channel sensing window starting from a time point that is earlier than the transmission resource time point by the length of the channel sensing window, and the corresponding transmission may be performed only when the result of the channel sensing is idle.

For example, in a shared spectrum, occupied channel bandwidth (OCB) and power spectral density (PSD) requirements may need to be satisfied. For example, to meet the OCB requirement, a common interlace (or a first interlace) may be used for inter-UE communication (e.g., SL-U) over the shared spectrum.

For example, during communication over a shared spectrum, a UE may not support simultaneous transmission for an inter-UE physical feedback channel (e.g., PSFCH) via non-contiguous RB sets. In this case, when the power is set high for the common PRBs, the coverage for the inter-UE physical feedback channel itself (e.g., the transmission of the inter-UE physical feedback channel (e.g., PSFCH) on dedicated PRBs) may be limited.

According to an embodiment of the present disclosure, when a UE performs a simultaneous inter-UE physical feedback channel transmission (e.g., PSFCH transmission), PSFCH transmissions with the lowest related inter-UE communication (e.g., SL communication) priority value may be determined as transmit targets.

That is, the UE may identify the inter-UE physical feedback channel transmission (e.g., PSFCH transmission) associated with the lowest priority value among a plurality of inter-UE physical feedback channel transmissions (e.g., PSFCH transmissions), and may simultaneously perform the identified inter-UE physical feedback channel transmission (e.g., PSFCH transmission) and other inter-UE physical feedback channel transmissions (e.g., PSFCH transmissions) included in a group of RB sets adjacent to the RB set containing the dedicated PRB for the identified inter-UE physical feedback channel transmission.

According to an embodiment of the present disclosure, the power for a common interlace or PRB may be derived by applying an offset to the power value for a dedicated PRB.

According to various embodiments of the present disclosure, by supporting only adjacent RB set transmission, there may be an effect where a UE whose capability may be relatively insufficient can efficiently perform simultaneous inter-UE physical feedback channel transmission (e.g., PSFCH transmission) while protecting high-priority transmissions.

For example, in addition, according to various embodiments of the present disclosure, there may be an effect where the power for a common PRB can be efficiently allocated in performing simultaneous inter-UE physical feedback channel transmission (e.g., PSFCH transmission).

Additionally, for example, according to various embodiments of the present disclosure, in a shared spectrum in which a RAT different from the RAT used by the UE for communication may coexist, communication based on adjacent RB sets may be performed, thereby enabling more stable communication against the influence of the other RAT, and by configuring communication to be performed for a single RB set group, there may be an effect of reducing the implementation complexity of the UE.

According to an embodiment of the present disclosure, simultaneous inter-UE physical feedback channel transmission/reception operation may be provided. For example, in an operation based on shared spectrum channel access, when the UE does not support inter-UE physical feedback channel transmission within non-adjacent RB sets, the UE may select adjacent RB sets including the inter-UE physical feedback channel having the smallest priority value for the inter-UE physical feedback channel transmission.

For example, in an operation based on shared spectrum channel access, the UE may attempt to receive an inter-UE physical feedback channel in N inter-UE physical feedback channel occasions until one inter-UE physical feedback channel is detected from each UE from which the UE expects to receive the inter-UE physical feedback channel, alternatively (e.g., if such detection is failed), the UE may attempt to receive the inter-UE physical feedback channel in all of the N inter-UE physical feedback channel occasions.

For example, in an operation based on shared spectrum channel access, when the sl-PSFCH-Type is Type 2, within RB set k, the UE may determine a subset of PRBs within a first interlace from a resource pool, and based on sl-PSFCH-RB-SetList, may determine a subset of $N^{\text{PSFCH\_PRB}}$ within a second interlace for transmission of an inter-UE physical feedback channel including HARQ-ACK information, alternatively, from the resource pool, the UE may determine a subset of $N^{\text{PSFCH\_PRB}}$ within the second interlace for transmission of an inter-UE physical feedback channel including collision information, based on sl-RB-SetPSFCHList. The index of the first interlace may be provided by sl-PSFCH-Type2-CommonInterlace.

For example, the power on the PRBs within a first interlace for inter-UE physical feedback channel transmission may be determined as follows.

[Equation 1]

$$P_{\text{PSFCH,PRB,first},k}(i) = P_{\text{PSFCH,PRB,second},k}(i) - P_{\text{PSFCH,offset}}$$

For example, the power for one PRB within a subset of PRBs in a second interlace for inter-UE physical feedback channel transmission may be determined as follows.

[Equation 2]

$$P_{\text{PSFCH,PRB,second},k}(i) = min\left(P_{\text{CMAX}} - 10log_{10}\left(N_{\text{Tx,PSFCH}} \cdot N_{\text{PSFCH,one}}^{\text{interlace2}} + N_{\text{PSFCH,one}}^{\text{interlace1}} \cdot 10^{(-P_{\text{PSFCH,offset}}/10)}\right), P_{\text{PSFCH,one}}\right)$$

Here, for example, P_(PSFCH,offset) may be provided by sl-PSFCH-Type2-PowerOffset.

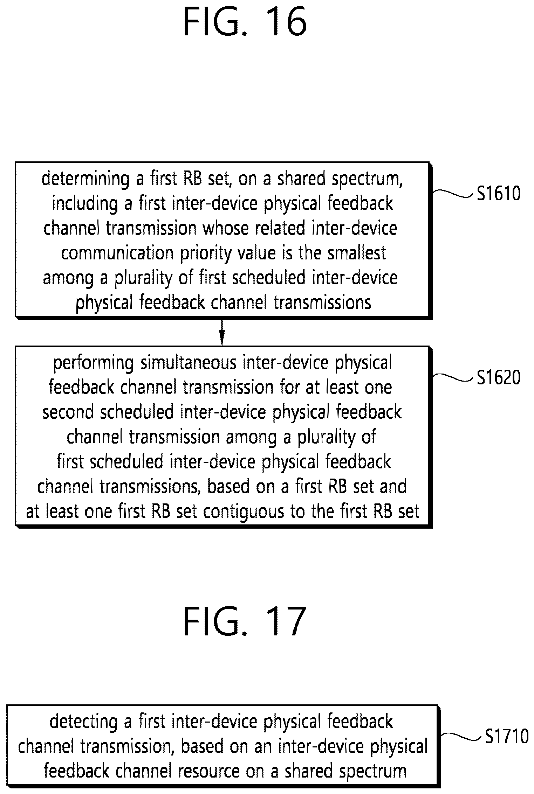

FIG. 16 shows a procedure in which a first device performs wireless communication according to an embodiment of the present disclosure. The embodiment of FIG. 16 may be combined with various embodiments of the present disclosure.

Referring to FIG. 16, in step S1610, a first device may determine a first resource block, RB, set, on a shared spectrum, including a first inter-device physical feedback channel transmission whose related inter-device communication priority value is the smallest among a plurality of first scheduled inter-device physical feedback channel transmissions. In step S1620, the first device may perform simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

For example, the first RB set and the at least one first RB set may be used to the simultaneous inter-device physical feedback channel transmission based on the first device not supporting non-contiguous RB sets.

For example, the at least one second scheduled inter-device physical feedback channel transmission may be at least one scheduled inter-device physical feedback channel transmission that is included within the first RB set and the at least one first RB set among the plurality of first scheduled inter-device physical feedback channel transmissions.

For example, the at least one second scheduled inter-device physical feedback channel transmission may be determined based on a priority, among a plurality of third scheduled inter-device physical feedback channel transmissions, and the plurality of third scheduled inter-device physical feedback channel transmissions may be a plurality of scheduled inter-device physical feedback channel transmissions that are included within the first RB set and the at least one first RB set among the plurality of first scheduled inter-device physical feedback channel transmissions.

For example, the plurality of first scheduled inter-device physical feedback channel transmissions may be determined based on a priority, among a plurality of scheduled inter-device physical feedback channel transmissions.

For example, a scheduled physical feedback channel transmission that is not included within the first RB set and the at least one RB set among the plurality of first scheduled inter-device physical feedback channel transmissions may be dropped.

For example, the simultaneous inter-device physical feedback channel transmission may be performed based on an inter-device physical feedback channel resource, and the inter-device physical feedback channel resource may include at least one first physical resource block, PRB, included within a first interlace and at least one second PRB included within a second interlace.

For example, first transmit power for the at least one first PRB may be determined based on second transmit power for the at least one second PRB.

For example, first transmit power for the at least one first PRB may be determined based on second transmit power for the at least one second PRB and an offset value.

For example, the inter-device physical feedback channel resource may include a plurality of inter-device physical feedback channel occasions with the same frequency resource.

For example, a first inter-device physical feedback channel transmission that is transmitted in a first inter-device physical feedback channel occasion among the plurality of inter-device physical feedback channel occasions may be transmitted to a second device, and a reception by the second device for an inter-device physical feedback channel transmission in an inter-device physical feedback channel occasion after the first inter-device physical feedback channel occasion among the plurality of inter-device physical feedback channel occasions may be not attempted.

For example, frequency resources, of a plurality of third PRBs that are included within each of the plurality of inter-device physical feedback channel occasions and are included within the first interlace, may be the same.

For example, the first RB set may be determined based on a number of RB sets that second RB sets, including a second inter-device physical feedback channel transmission, whose related inter-device communication priority value is the same as the first inter-device physical feedback channel transmission, among the plurality of first scheduled inter-device physical feedback channel transmissions, and at least one second RB set contiguous to the second RBs set include being less than a number of RB sets that the first RB set and the at least one RB set include.

The above-described embodiment may be applied to various devices described below. For example, a processor 102 of a first device 100 may determine a first resource block, RB, set, on a shared spectrum, including a first inter-device physical feedback channel transmission whose related inter-device communication priority value is the smallest among a plurality of first scheduled inter-device physical feedback channel transmissions. And, the processor 102 of the first device 100 may control a transceiver 106 to perform simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining a first resource block, RB, set, on a shared spectrum, including a first inter-device physical feedback channel transmission whose related inter-device communication priority value is the smallest among a plurality of first scheduled inter-device physical feedback channel transmissions; and performing simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

For example, the first RB set and the at least one first RB set may be used to the simultaneous inter-device physical feedback channel transmission based on the first device not supporting non-contiguous RB sets.

For example, the at least one second scheduled inter-device physical feedback channel transmission may be at least one scheduled inter-device physical feedback channel transmission that is included within the first RB set and the at least one first RB set among the plurality of first scheduled inter-device physical feedback channel transmissions.

For example, the at least one second scheduled inter-device physical feedback channel transmission may be determined based on a priority, among a plurality of third scheduled inter-device physical feedback channel transmissions, and the plurality of third scheduled inter-device physical feedback channel transmissions may be a plurality of scheduled inter-device physical feedback channel transmissions that are included within the first RB set and the at least one first RB set among the plurality of first scheduled inter-device physical feedback channel transmissions.

For example, the plurality of first scheduled inter-device physical feedback channel transmissions may be determined based on a priority, among a plurality of scheduled inter-device physical feedback channel transmissions.

For example, a scheduled physical feedback channel transmission that is not included within the first RB set and the at least one RB set among the plurality of first scheduled inter-device physical feedback channel transmissions may be dropped.

For example, the simultaneous inter-device physical feedback channel transmission may be performed based on an inter-device physical feedback channel resource, and the inter-device physical feedback channel resource may include at least one first physical resource block, PRB, included within a first interlace and at least one second PRB included within a second interlace.

For example, first transmit power for the at least one first PRB may be determined based on second transmit power for the at least one second PRB.

For example, first transmit power for the at least one first PRB may be determined based on second transmit power for the at least one second PRB and an offset value.

For example, the inter-device physical feedback channel resource may include a plurality of inter-device physical feedback channel occasions with the same frequency resource.

For example, a first inter-device physical feedback channel transmission that is transmitted in a first inter-device physical feedback channel occasion among the plurality of inter-device physical feedback channel occasions may be transmitted to a second device, and a reception by the second device for an inter-device physical feedback channel transmission in an inter-device physical feedback channel occasion after the first inter-device physical feedback channel occasion among the plurality of inter-device physical feedback channel occasions may be not attempted.

For example, frequency resources, of a plurality of third PRBs that are included within each of the plurality of inter-device physical feedback channel occasions and are included within the first interlace, may be the same.

For example, the first RB set may be determined based on a number of RB sets that second RB sets, including a second inter-device physical feedback channel transmission, whose related inter-device communication priority value is the same as the first inter-device physical feedback channel transmission, among the plurality of first scheduled inter-device physical feedback channel transmissions, and at least one second RB set contiguous to the second RBs set include being less than a number of RB sets that the first RB set and the at least one RB set include.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: determining a first resource block, RB, set, on a shared spectrum, including a first inter-UE physical feedback channel transmission whose related inter-UE communication priority value is the smallest among a plurality of first scheduled inter-UE physical feedback channel transmissions; and performing simultaneous inter-UE physical feedback channel transmission for at least one second scheduled inter-UE physical feedback channel transmission among the plurality of first scheduled inter-UE physical feedback channel transmissions, based on the first RB set and at least one first RB set contiguous to the first RB set.

According to an embodiment of the present disclosure, a non-transitory computer-readable storage medium storing instructions may be proposed. For example, the instructions, based on being executed, may cause a first device to: determine a first resource block, RB, set, on a shared spectrum, including a first inter-device physical feedback channel transmission whose related inter-device communication priority value is the smallest among a plurality of first scheduled inter-device physical feedback channel transmissions; and perform simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

FIG. 17 shows a procedure in which a second device performs wireless communication according to an embodiment of the present disclosure. The embodiment of FIG. 17 may be combined with various embodiments of the present disclosure.

Referring to FIG. 17, in step S1710, a second device may detect a first inter-device physical feedback channel transmission, based on an inter-device physical feedback channel resource on a shared spectrum. For example, the first inter-device physical feedback channel transmission may be included in a simultaneous inter-device physical feedback channel transmission, the inter-device physical feedback channel resource may be included in a first resource block, RB, set and at least one first RB set contiguous to the first RB set, and the first RB set may be determined based on the first RB set including a first inter-device physical feedback channel transmission whose related inter-device communication priority value is the smallest among a plurality of first scheduled inter-device physical feedback channel transmissions.

For example, the first inter-device physical feedback channel transmission may be received based on a first inter-device physical feedback channel occasion among a plurality of inter-device physical feedback channel occasions included in the inter-device physical feedback channel resource, and a reception for an inter-device physical feedback channel transmission after the first inter-device physical feedback channel occasion among the plurality of inter-device physical feedback channel occasions may be not attempted, based on the first inter-device physical feedback channel transmission being detected.

The above-described embodiment may be applied to various devices described below. For example, a processor 202 of a second device 200 may detect a first inter-device physical feedback channel transmission, based on an inter-device physical feedback channel resource on a shared spectrum. For example, the first inter-device physical feedback channel transmission may be included in a simultaneous inter-device physical feedback channel transmission, the inter-device physical feedback channel resource may be included in a first resource block, RB, set and at least one first RB set contiguous to the first RB set, and the first RB set may be determined based on the first RB set including a first inter-device physical feedback channel transmission whose related inter-device communication priority value is the smallest among a plurality of first scheduled inter-device physical feedback channel transmissions.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: detecting a first inter-device physical feedback channel transmission, based on an inter-device physical feedback channel resource on a shared spectrum, wherein the first inter-device physical feedback channel transmission may be included in a simultaneous inter-device physical feedback channel transmission, wherein the inter-device physical feedback channel resource may be included in a first resource block, RB, set and at least one first RB set contiguous to the first RB set, and wherein the first RB set may be determined based on the first RB set including a first inter-device physical feedback channel transmission whose related inter-device communication priority value is the smallest among a plurality of first scheduled inter-device physical feedback channel transmissions.

For example, the first inter-device physical feedback channel transmission may be received based on a first inter-device physical feedback channel occasion among a plurality of inter-device physical feedback channel occasions included in the inter-device physical feedback channel resource, and a reception for an inter-device physical feedback channel transmission after the first inter-device physical feedback channel occasion among the plurality of inter-device physical feedback channel occasions may be not attempted, based on the first inter-device physical feedback channel transmission being detected.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

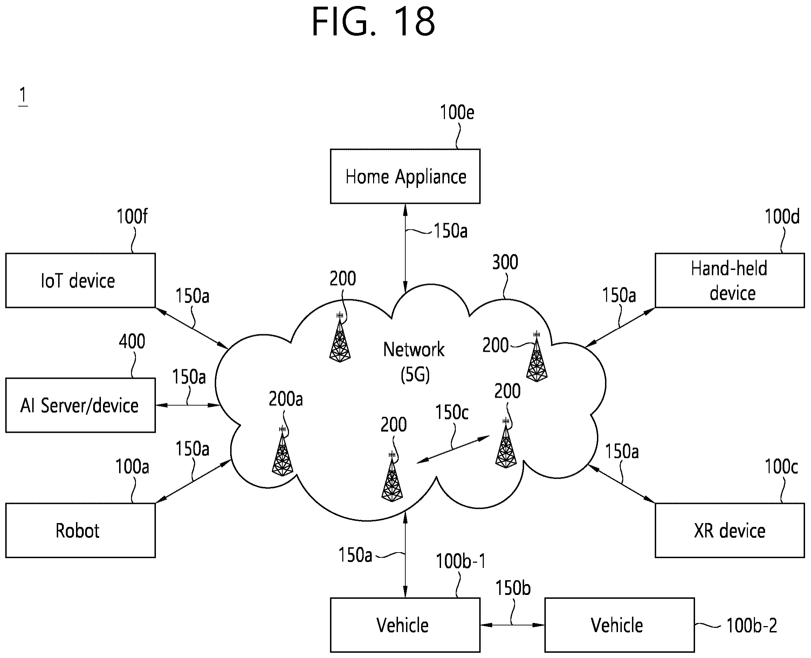

FIG. 18 shows a communication system 1, based on an embodiment of the present disclosure. The embodiment of FIG. 18 may be combined with various embodiments of the present disclosure.

Referring to FIG. 18, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

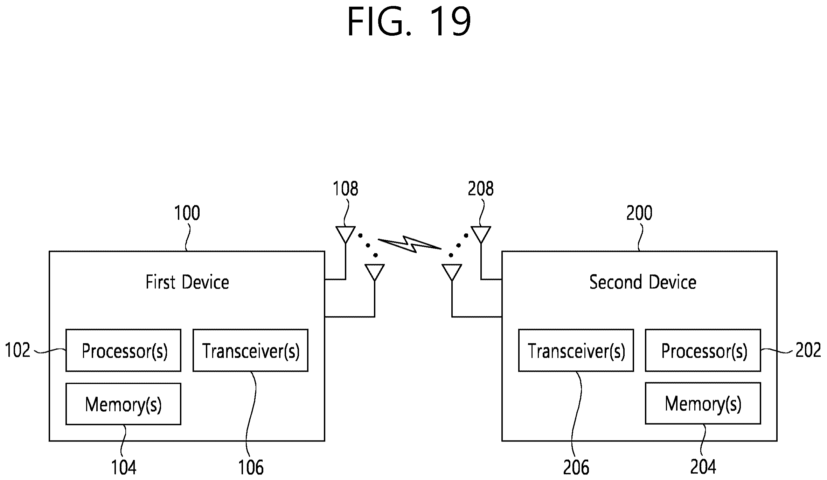

FIG. 19 shows wireless devices, based on an embodiment of the present disclosure. The embodiment of FIG. 19 may be combined with various embodiments of the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

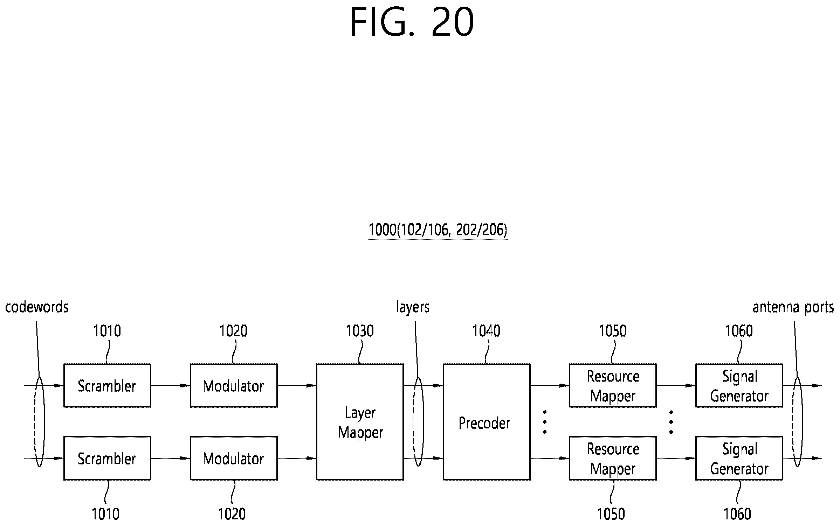

FIG. 20 shows a signal process circuit for a transmission signal, based on an embodiment of the present disclosure. The embodiment of FIG. 20 may be combined with various embodiments of the present disclosure.

Referring to FIG. 20, a signal processing circuit 1000 may include scramblers 1010, modulators 1020, a layer mapper 1030, a precoder 1040, resource mappers 1050, and signal generators 1060. An operation/function of FIG. 20 may be performed, without being limited to, the processors 102 and 202 and/or the transceivers 106 and 206 of FIG. 19. Hardware elements of FIG. 20 may be implemented by the processors 102 and 202 and/or the transceivers 106 and 206 of FIG. 19. For example, blocks 1010 to 1060 may be implemented by the processors 102 and 202 of FIG. 19. Alternatively, the blocks 1010 to 1050 may be implemented by the processors 102 and 202 of FIG. 19 and the block 1060 may be implemented by the transceivers 106 and 206 of FIG. 19.

Codewords may be converted into radio signals via the signal processing circuit 1000 of FIG. 20. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 20. For example, the wireless devices (e.g., 100 and 200 of FIG. 19) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

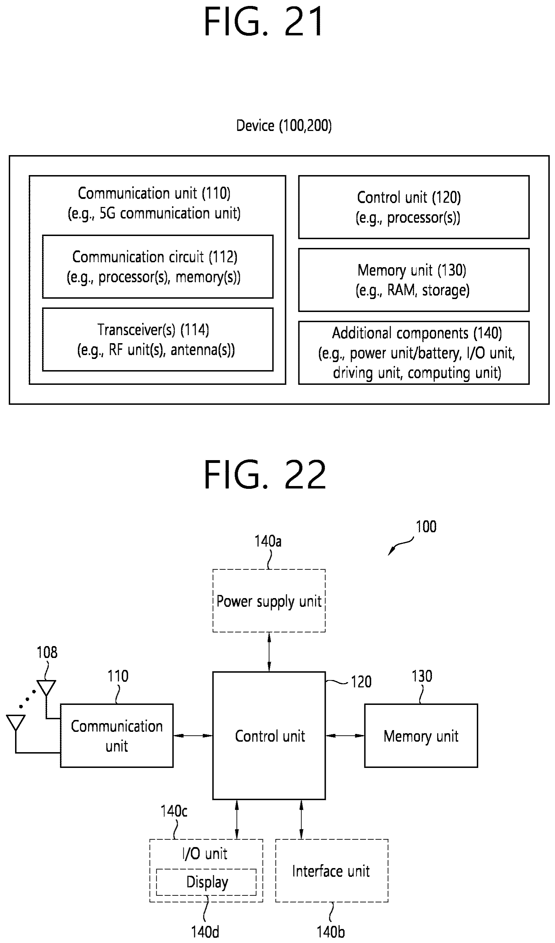

FIG. 21 shows another example of a wireless device, based on an embodiment of the present disclosure. The wireless device may be implemented in various forms according to a use-case/service (refer to FIG. 18). The embodiment of FIG. 21 may be combined with various embodiments of the present disclosure.

Referring to FIG. 21, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 21, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 21 will be described in detail with reference to the drawings.

FIG. 22 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 22 may be combined with various embodiments of the present disclosure.

Referring to FIG. 22, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 21, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

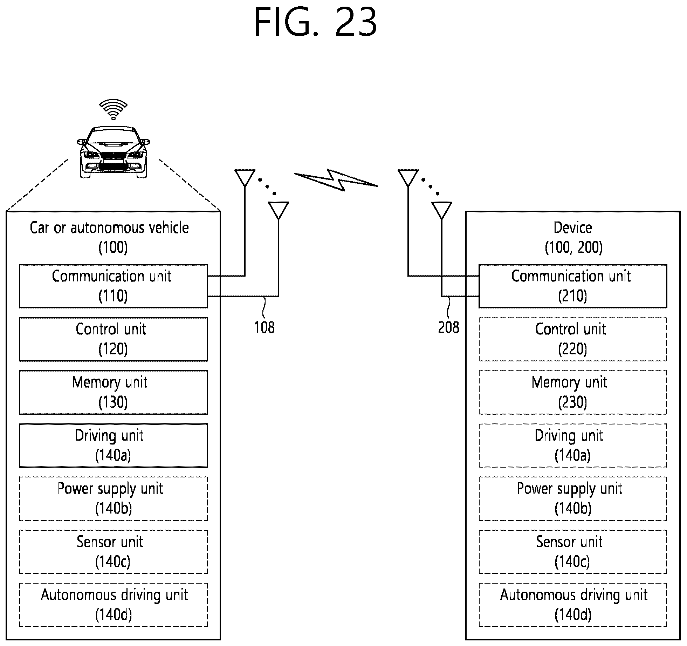

FIG. 23 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 23 may be combined with various embodiments of the present disclosure.

Referring to FIG. 23, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 21, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:

   determining a first resource block, RB, set, on a shared spectrum, including a first inter-device physical feedback channel transmission whose related inter-device communication priority value is the smallest among a plurality of first scheduled inter-device physical feedback channel transmissions; and
   performing simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

2. The method of claim 1, wherein the first RB set and the at least one first RB set are used to the simultaneous inter-device physical feedback channel transmission based on the first device not supporting non-contiguous RB sets.

3. The method of claim 1, wherein the at least one second scheduled inter-device physical feedback channel transmission is at least one scheduled inter-device physical feedback channel transmission that is included within the first RB set and the at least one first RB set among the plurality of first scheduled inter-device physical feedback channel transmissions.

4. The method of claim 1, wherein the at least one second scheduled inter-device physical feedback channel transmission is determined based on a priority, among a plurality of third scheduled inter-device physical feedback channel transmissions, and
   where the plurality of third scheduled inter-device physical feedback channel transmissions are a plurality of scheduled inter-device physical feedback channel transmissions that are included within the first RB set and the at least one first RB set among the plurality of first scheduled inter-device physical feedback channel transmissions.

5. The method of claim 1, wherein the plurality of first scheduled inter-device physical feedback channel transmissions are determined based on a priority, among a plurality of scheduled inter-device physical feedback channel transmissions.

6. The method of claim 5, wherein a scheduled physical feedback channel transmission that is not included within the first RB set and the at least one RB set among the plurality of first scheduled inter-device physical feedback channel transmissions is dropped.

7. The method of claim 1, wherein the simultaneous inter-device physical feedback channel transmission is performed based on an inter-device physical feedback channel resource, and
where the inter-device physical feedback channel resource includes at least one first physical resource block, PRB, included within a first interlace and at least one second PRB included within a second interlace.

8. The method of claim 7, wherein first transmit power for the at least one first PRB is determined based on second transmit power for the at least one second PRB.

9. The method of claim 7, wherein first transmit power for the at least one first PRB is determined based on second transmit power for the at least one second PRB and an offset value.

10. The method of claim 7, wherein the inter-device physical feedback channel resource includes a plurality of inter-device physical feedback channel occasions with the same frequency resource.

11. The method of claim 10, wherein a first inter-device physical feedback channel transmission that is transmitted in a first inter-device physical feedback channel occasion among the plurality of inter-device physical feedback channel occasions is transmitted to a second device, and
wherein a reception by the second device for an inter-device physical feedback channel transmission in an inter-device physical feedback channel occasion after the first inter-device physical feedback channel occasion among the plurality of inter-device physical feedback channel occasions is not attempted.

12. The method of claim 10, wherein frequency resources, of a plurality of third PRBs that are included within each of the plurality of inter-device physical feedback channel occasions and are included within the first interlace, are the same.

13. The method of claim 1, wherein the first RB set is determined based on a number of RB sets that second RB sets, including a second inter-device physical feedback channel transmission, whose related inter-device communication priority value is the same as the first inter-device physical feedback channel transmission, among the plurality of first scheduled inter-device physical feedback channel transmissions, and at least one second RB set contiguous to the second RBs set include being less than a number of RB sets that the first RB set and the at least one RB set include.

14. A first device for performing wireless communication, the first device comprising:

   at least one transceiver;
   at least one processor; and
   at least one memory operably connected to the at least one processor and storing instructions that, based on being executed by the at least one processor, cause the first device to perform operations,
   wherein the operations comprise:

      determining a first resource block, RB, set, on a shared spectrum, including a first inter-device physical feedback channel transmission whose related inter-device communication priority value is the smallest among a plurality of first scheduled inter-device physical feedback channel transmissions; and
      performing simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

15. A device adapted to control a first user equipment, UE, the device comprising:

   at least one processor; and
   at least one memory operably connected to the at least one processor and storing instructions that, based on being executed by the at least one processor, cause the first UE to perform operations,

wherein the operations comprise:

determining a first resource block, RB, set, on a shared spectrum, including a first inter-UE physical feedback channel transmission whose related inter-UE communication priority value is the smallest among a plurality of first scheduled inter-UE physical feedback channel transmissions; and
performing simultaneous inter-UE physical feedback channel transmission for at least one second scheduled inter-UE physical feedback channel transmission among the plurality of first scheduled inter-UE physical feedback channel transmissions, based on the first RB set and at least one first RB set contiguous to the first RB set.

16. A non-transitory computer-readable storage medium storing instructions that, based on being executed, cause a first device to:

determine a first resource block, RB, set, on a shared spectrum, including a first inter-device physical feedback channel transmission whose related inter-device communication priority value is the smallest among a plurality of first scheduled inter-device physical feedback channel transmissions; and
perform simultaneous inter-device physical feedback channel transmission for at least one second scheduled inter-device physical feedback channel transmission among the plurality of first scheduled inter-device physical feedback channel transmissions, based on the first RB set and at least one first RB set contiguous to the first RB set.

17. A method for performing, by a second device, wireless communication, the method comprising:

detecting a first inter-device physical feedback channel transmission, based on an inter-device physical feedback channel resource on a shared spectrum,
wherein the first inter-device physical feedback channel transmission is included in a simultaneous inter-device physical feedback channel transmission,
wherein the inter-device physical feedback channel resource is included in a first resource block, RB, set and at least one first RB set contiguous to the first RB set, and
wherein the first RB set is determined based on the first RB set including a first inter-device physical feedback channel transmission whose related inter-device communication priority value is the smallest among a plurality of first scheduled inter-device physical feedback channel transmissions.

18. The method of claim 17, wherein the first inter-device physical feedback channel transmission is received based on a first inter-device physical feedback channel occasion among a plurality of inter-device physical feedback channel occasions included in the inter-device physical feedback channel resource, and
wherein a reception for an inter-device physical feedback channel transmission after the first inter-device physical feedback channel occasion among the plurality of inter-device physical feedback channel occasions is not attempted, based on the first inter-device physical feedback channel transmission being detected.

19. A second device for performing wireless communication, the second device comprising:

at least one transceiver;
at least one processor; and
at least one memory operably connected to the at least one processor and storing instructions that, based on being executed by the at least one processor, cause the second device to perform operations,
wherein the operations comprise:

detecting a first inter-device physical feedback channel transmission, based on an inter-device physical feedback channel resource on a shared spectrum,
wherein the first inter-device physical feedback channel transmission is included in a simultaneous inter-device physical feedback channel transmission,
wherein the inter-device physical feedback channel resource is included in a first resource block, RB, set and at least one first RB set contiguous to the first RB set, and
wherein the first RB set is determined based on the first RB set including a first inter-device physical feedback channel transmission whose related inter-device communication priority value is the smallest among a plurality of first scheduled inter-device physical feedback channel transmissions.

20. The second device of claim 19, wherein the first inter-device physical feedback channel transmission is received based on a first inter-device physical feedback channel occasion among a plurality of inter-device physical feedback channel occasions included in the inter-device physical feedback channel resource, and
wherein a reception for an inter-device physical feedback channel transmission after the first inter-device physical feedback channel occasion among the plurality of inter-device physical feedback channel occasions is not attempted, based on the first inter-device physical feedback channel transmission being detected.

# FIG. 1

# FIG. 2

# FIG. 3

EP 4 668 910 A1

# FIG. 4

Satellite
(or UAS platform)

Satellite
(or UAS platform)

ISL

Feeder link

Service
link

Feeder link
(mandatory if on ISL)

Gateway

Data network

User
Equipments

Beam foot
print

Field of view of the satellite
(or UAS platform)

EP 4 668 910 A1

FIG. 5

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 668 910 A1

# FIG. 7

PRB N3

PRB 1

PRB 0

$N_{BWP, 2}^{size}$

PRB N2

PRB 1

PRB 0

$N_{BWP, 1}^{size}$

PRB N1

PRB 1

PRB 0

$N_{BWP, 0}^{size}$

Carrier Bandwidth

$N_{BWP, 2}^{start}$

$N_{BWP, 1}^{start}$

$N_{BWP, 0}^{start}$

CRB 0

Freq.

Time

PRB 0 (Point A) in reference resource block

# FIG. 8

| BS | first UE | second UE | first UE | second UE |

resource scheduling — S800

PSCCH — S810

PSSCH — S820

PSFCH — S830

PUCCH/PUSCH — S840

PSCCH — S810

PSSCH — S820

PSFCH — S830

(a)                                      (b)

# FIG. 9

(a) Carrier aggregation between L-band and U-band

(b) Standalone U-band(s)

# FIG. 10

Not occupied

Occupied

| Channel Occupancy Time | | | Channel Occupancy Time | | |

Extended CCA

CCA

# FIG. 11

Frequency

BWP {

LBT-SB#(K-1)
(e.g., 20MHz)

⋮

LBT-SB#1
(e.g., 20MHz)

LBT-SB#0
(e.g., 20MHz)

# FIG. 12

EP 4 668 910 A1

# FIG. 13

EP 4 668 910 A1

# FIG. 14

EP 4 668 910 A1

RB sets

P_MAX exceeded

determining the maximum number of
inter-UE physical feedback channel
transmissions that do not exceed P_MAX,
based on priorities
(S1410)

Eighth RB set
Seventh RB set
Sixth RB set — 1

Fifth RB set

Fourth RB set

Third RB set
Second RB set — 1

First RB set

P_MAX satisfied

determining an RB set including
an inter-UE physical feedback channel transmission
with the smallest priority value,
and the RB sets contiguous to it
(S1420)

Eighth RB set
Seventh RB set
Sixth RB set

performing a simultaneous
inter-UE physical feedback
channel transmission
(S1430)

# FIG. 15

Second PRB — 1

First PRB — 1

Fifth RB set
Fourth RB set
Third RB set

Second RB set
First RB set

P_MAX exceeded

Fifth RB set
Fourth RB set
Third RB set

performing a simultaneous
inter-UE physical feedback
channel transmission
(S1530)

P_MAX satisfied

determining an RB set including
an inter-UE physical feedback channel
transmission with the smallest priority value,
and the RB sets contiguous to it
(S1510)

determining the maximum number of
inter-UE physical feedback channel
transmissions that do not exceed P_MAX,
based on priorities
(S1520)

EP 4 668 910 A1

# FIG. 16

determining a first RB set, on a shared spectrum, including a first inter-device physical feedback channel transmission whose related inter-device communication priority value is the smallest among a plurality of first scheduled inter-device physical feedback channel transmissions ~S1610

performing simultaneous inter-device physical feedback channel transmission for at least one second scheduled inter-device physical feedback channel transmission among a plurality of first scheduled inter-device physical feedback channel transmissions, based on a first RB set and at least one first RB set contiguous to the first RB set ~S1620

# FIG. 17

detecting a first inter-device physical feedback channel transmission, based on an inter-device physical feedback channel resource on a shared spectrum ~S1710

# FIG. 18

# FIG. 19

EP 4 668 910 A1

# FIG. 20

1000(102/106, 202/206)

# FIG. 21

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit, driving unit, computing unit)

# FIG. 22

100

140a

Power supply unit

108

110

Communication unit

120

Control unit

130

Memory unit

140c

I/O unit

Display

140d

Interface unit

140b

# FIG. 23

Car or autonomous vehicle (100)
- Communication unit (110)
- Control unit (120)
- Memory unit (130)
- Driving unit (140a)
- Power supply unit (140b)
- Sensor unit (140c)
- Autonomous driving unit (140d)

108

Device (100, 200)
- Communication unit (210)
- Control unit (220)
- Memory unit (230)
- Driving unit (140a)
- Power supply unit (140b)
- Sensor unit (140c)
- Autonomous driving unit (140d)

208

EP 4 668 910 A1

## INTERNATIONAL SEARCH REPORT

| | International application No. |
|---|---|
| | **PCT/KR2024/001669** |

---

**A. CLASSIFICATION OF SUBJECT MATTER**

**H04W 56/00**(2009.01)i; **H04W 72/04**(2009.01)i; **H04W 74/08**(2009.01)i; **H04W 24/08**(2009.01)i; **H04J 11/00**(2006.01)i; **H04W 92/18**(2009.01)i; **H04W 72/56**(2023.01)i; **H04L 1/18**(2006.01)i

According to International Patent Classification (IPC) or to both national classification and IPC

**B. FIELDS SEARCHED**

Minimum documentation searched (classification system followed by classification symbols)

H04W 56/00(2009.01); H04L 1/18(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공유 스펙트럼(shared spectrum), 물리 피드백 채널(physical feedback channel), RB(resource block), 동시적(simultaneous), physical sidelink feedback channel(PSFCH), 우선순위(priority)

**C. DOCUMENTS CONSIDERED TO BE RELEVANT**

| Category* | Citation of document, with indication, where appropriate, of the relevant passages | Relevant to claim No. |
|---|---|---|
| Y <br> A | LG ELECTRONICS. Discussion on physical channel design framework for sidelink on unlicensed spectrum. R1-2209479, 3GPP TSG RAN WG1 #110bis-e, e-Meeting. 30 September 2022. <br> See sections 2.1, 2.2.1 and 2.3. | 1-10,12,14-17,19 <br><br> 11,13,18,20 |
| Y | HUAWEI et al. Discussion on V2X RB allocation. R5-212925, 3GPP TSG-RAN WG5 Meeting #91-e, Electronic Meeting. 07 May 2021. <br> See section 4.2. | 1-10,12,14-17,19 |
| A | OPPO. On channel access mechanism and resource allocation for SL-U. R1-2211450, 3GPP TSG-RAN WG1 Meeting #111. Toulouse, France. 07 November 2022. <br> See sections 2.1.1-2.1.6. | 1-20 |
| A | LG ELECTRONICS. Discussion on physical channel design framework for sidelink on unlicensed spectrum. R1-2211264, 3GPP TSG-RAN WG1 Meeting #111. Toulouse, France. 07 November 2022. <br> See sections 2.1.1-2.1.2 and 2.3. | 1-20 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 May 2024** | **07 May 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/001669**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022-133377 A1 (QUALCOMM INCORPORATED) 23 June 2022 (2022-06-23)<br>See paragraphs [0078]-[0149]; and figures 7-10. | 1-20 |

Form PCT/ISA/210 (second sheet) (July 2022)

**INTERNATIONAL SEARCH REPORT**
Information on patent family members

International application No.

**PCT/KR2024/001669**

| Patent document cited in search report | | | Publication date (day/month/year) | Patent family member(s) | | | Publication date (day/month/year) |
|---|---|---|---|---|---|---|---|
| WO | 2022-133377 | A1 | 23 June 2022 | CN | 116601909 | A | 15 August 2023 |
| | | | | EP | 4264863 | A1 | 25 October 2023 |
| | | | | US | 2022-0200738 | A1 | 23 June 2022 |

Form PCT/ISA/210 (patent family annex) (July 2022)